# EUROPEAN PATENT APPLICATION

(11) **EP 2 610 710 A1**
(43) Date of publication of application: **03.07.2013**
(21) Application number: 12196749.1
(22) Date of filing: 12.12.2012
(51) Int. Cl.: G06F 3/01, G06F 3/0484, B60K 37/06

(54) **Operation input system**

(30) Priority: 27.12.2011 JP 2011286495
(71) Applicant: AISIN AW CO., LTD., Anjo-shi, Aichi 444-1192 (JP)
(72) Inventor: Kubota, Shinichi, Anjo-shi,, Aichi 444-1192 (JP)
(74) Representative: TBK

(57) **Abstract**

An operation input system comprises: plural protrusion members arranged along a single flat surface, a distal end portion of which being able to protrude from the surface; a control section that controls a protrusion height of each protrusion member with respect to the surface; and a command reception section that receives input of a command for a value of an adjustment amount for a particular adjustment subject selected from plural types of adjustment subjects. The control section causes plural of the protrusion members disposed along a reference direction in a set region set on the surface to protrude. The command reception section sets a value of the adjustment amount corresponding to a position of the protrusion members along the reference direction. In case that a part of the protrusion members in the set region is depressed toward the surface, the command reception section receives input of a command for the value of the adjustment amount set for the depressed protrusion member.

## Description

### BACKGROUND OF THE INVENTION

The present invention relates to an operation input system that allows to input a command for a value of an adjustment amount for a predetermined adjustment subject.

### Description of the Related Art

A command for a value of an adjustment amount for a predetermined adjustment subject is input to various types of devices. For a car audio system serving as the adjustment subject mounted on a vehicle, for example, a user inputs a command for a set value of volume serving as the adjustment amount. For an air conditioner serving as an adjustment subject mounted on a vehicle, for example, the user inputs commands for set values of temperature and air volume each serving as the adjustment amount. In the related art, a command for a set value of an adjustment amount is input through an operation section provided at a center console portion of a vehicle. As navigation systems become widespread, meanwhile, commands for set values of various types of adjustment amounts are input through a user interface such as a touch panel provided in the navigation system.

The navigation system is often operated by a driver of a vehicle. In such a case, the user (the driver of the vehicle) operates the navigation system in between driving. Therefore, it is difficult to perform an operation while closely watching a display screen, and a desired operation may not be performed accurately. In view of this point, there is proposed an operation input system that allows to input commands for set values of various types of adjustment amounts without closely watching a display screen. For example, Japanese Patent Application Publication No. 2010-224658 (JP 2010-224658 A) proposes a technology for allowing to input a command for a set temperature on the basis of a predetermined operation performed on a functional button for setting an air conditioner temperature.

In the technology described in JP 2010-224658 A, in the case where an operation of drawing a circle is performed as the predetermined operation described above on the functional button, the adjustment amount is changed in accordance with the circle drawing direction and the length of the arc. However, the user must memorize such an operation and how the value of the adjustment amount is changed in association with each other, which leaves room for improvement in terms of convenience.

### SUMMARY OF THE INVENTION

In view of the foregoing, it is an object of the invention to provide an operation input system that enables to input a command for a value of an adjustment amount for a predetermined adjustment subject through an intuitive operation without closely watching a display screen.
This object is achieved by an operation input system according to claim 1. Advantageous further developments are as set forth in the dependent claims.

According to an aspect of the present invention, there is provided an operation input system including: a plurality of protrusion members arranged in accordance with a predetermined rule along a single flat surface and a distal end portion of which is able to protrude from the flat surface; a protrusion control section that controls a protrusion height of each of the protrusion members with respect to the flat surface; and a command reception section that receives input of a command for a value of an adjustment amount for a particular adjustment subject selected from a plurality of types of adjustment subjects, in which: the protrusion control section causes a plurality of the protrusion members disposed along a predetermined reference direction in a set region set on the flat surface to protrude; and the command reception section sets a value of the adjustment amount corresponding to a position of the protrusion members along the reference direction, and in the case where a part of the protrusion members in the set region is depressed toward the flat surface, the command reception section receives input of a command for the value of the adjustment amount set for the depressed protrusion member.

According to the aspect, each of the protrusion members disposed along the predetermined reference direction in the set region functions as a medium for receiving input of a command for a value of the adjustment amount. That is, in the case where a part of the protrusion members in the set region is depressed, input of a command for the value of the adjustment amount corresponding to the position of the depressed protrusion member along the reference direction is received. This allows the user to input a command for a value of the adjustment amount through an intuitive operation of depressing toward the operation surface the protrusion member at a position that he/she feels corresponds to a desired value of the adjustment amount.
According to the aspect, in addition, the predetermined flat surface is formed to be flat. In contrast, the distal end portion of the protrusion member disposed in the set region is distinctly protruded from the flat surface so as to be directly recognizable through tactile sensation using a fingertip of the user etc. This allows the user to input a command by the method described above in reliance on the protrusion member protruding from the flat surface. Thus, it is possible to provide an operation input system that enables to input a command for a value of an adjustment amount for a predetermined adjustment subject through an intuitive operation without closely watching a display screen.

The protrusion control section may perform protrusion height adjustment control in which a plurality of the protrusion members disposed in the set region are caused to protrude such that the protrusion height of the plurality of protrusion members is different stepwise in accordance with the position along the reference direction; and the command reception section may set a value of the adjustment amount corresponding to a protrusion position and the protrusion height of the protrusion members along the reference direction, and in the case where a part of the protrusion members in the set region is depressed toward the flat surface, the command reception section may receive input of a command for the value of the adjustment amount corresponding to the protrusion height set for the depressed protrusion member.

According to the configuration, the protrusion height of the plurality of protrusion members disposed in the set region is varied stepwise in accordance with the position along the reference direction through the protrusion height adjustment control. In the case where a part of the protrusion members in the set region is depressed, input of a command for the value of the adjustment amount corresponding to the position of the depressed protrusion member and the protrusion height set for the depressed protrusion member is received. This allows the user to input a command for a value of the adjustment amount through an intuitive operation of depressing toward the operation surface the protrusion member at a protrusion height that he/she feels corresponds to a desired value of the adjustment amount.

The operation input system may further include a display device that includes a display screen and displays an image on the display screen, and the protrusion control section may execute the protrusion height adjustment control while a reception image indicating that input of a command for the adjustment amount is acceptable is displayed on the display screen.

According to the configuration, when the reception image is displayed and input of a command for a value of the adjustment amount should be received, the protrusion members can be appropriately controlled such that the protrusion height of the protrusion members is different stepwise along the reference direction. In addition, it is possible to prevent input of a command not intended by the user performed by the medium of the protrusion members in the case where the reception image is not displayed on the display screen.

The protrusion control section may make the protrusion height of a current-value protrusion member, which is one of a plurality of the protrusion members disposed in the set region and corresponds to a current value of the adjustment amount for the particular adjustment subject, different from a reference height corresponding to the current value of the adjustment amount, and in the case where the current-value protrusion member is depressed toward the flat surface, the command reception section may receive input of a command for the value of the adjustment amount corresponding to the reference height.

According to the configuration, the protrusion height of the plurality of protrusion members disposed in the set region is varied regularly along the predetermined reference direction as a whole, and varied irregularly at the position of the current-value protrusion member. This allows the user to recognize the current value of the adjustment amount on the basis of recognizing such an irregularity through tactile sensation. This makes it easy for the user to input a command for a desired value of the adjustment amount also on the basis of the relationship with the current value.
According to the configuration, in addition, in the case where the current-value protrusion member is depressed, input of a command for a value (that is, the current value of the adjustment amount) of the adjustment amount corresponding to the reference height for the current value of the adjustment amount is received irrespective of the protrusion height of the current-value protrusion member at the time point. This prevents input of a command for a value of the adjustment amount not intended by the user due to a compulsory change in protrusion height of the current-value protrusion member made in order to cause the user to recognize the current value.

The protrusion control section may bring the protrusion height of the current-value protrusion member to a minimum or a maximum.

According to the configuration, an irregularity in protrusion height of the protrusion members at the position of the current-value protrusion member is accentuated to make it easy for the user to recognize the current value of the adjustment amount.

In the case where input of a new value of the adjustment amount is received by the command reception section, the protrusion control section may bring the protrusion height of the protrusion member corresponding to a previous value of the adjustment amount for the particular adjustment subject to a reference height corresponding to the previous value of the adjustment amount; and the protrusion control section may make the protrusion height of the protrusion member corresponding to the new value of the adjustment amount different from a reference height corresponding to the new value of the adjustment amount.

According to the configuration, the previous value of the adjustment amount can be received appropriately after input of the new value of the adjustment amount is received. In addition, the user is allowed to recognize the current value of the adjustment amount after the change.

The operation input system may further include a touch pad that includes an operation plate, on a surface of which an operation surface serving as the flat surface is formed, and senses an object to be sensed in contact with or in proximity to the operation surface to receive input corresponding to a position of the sensed object; the plurality of protrusion members may be provided to be able to independently protrude from the operation surface through the operation plate; and the command reception section may determine that the protrusion member is depressed toward the flat surface on the basis of input received on the touch pad in the set region.

According to the configuration, a predetermined operation can be input to another device communicably connected to the operation input system in accordance with the position of the object to be sensed in contact with or in proximity to the operation surface of the touch pad. In addition, it is possible to appropriately determine that a part of the protrusion members in the set region is depressed toward the flat surface on the basis of input received on the touch pad in the set region, utilizing the function of the touch pad.

The operation input system may further include a touch pad that includes an operation plate, on a surface of which an operation surface is formed, and senses an object to be sensed in contact with or in proximity to the operation surface to receive input corresponding to a position of the sensed object; and the command reception section may further set a value of the adjustment amount corresponding to a position of a region between a pair of the protrusion members which are adjacent along the reference direction in the set region, and may receive input of a command for a value of the adjustment amount corresponding to the position of the sensed object in the set region also on the basis of input received on the touch pad in the set region.

According to the configuration, a predetermined operation can be input to another device communicably connected to the operation input system in accordance with the position of the object to be sensed in contact with or in proximity to the operation surface of the touch pad. In addition, it is possible to receive input of a command for the value of the adjustment amount corresponding to the position of a region between a pair of protrusion members which are adjacent along the reference direction in the set region, utilizing the function of the touch pad. That is, it is possible to appropriately receive input of a command for a value of the adjustment amount by the medium of both each of the protrusion members disposed in the set region and a region between a pair of protrusion members which are adjacent to each other in the set region on the operation surface.

### BRIEF DESCRIPTION OF THE DRAWINGS

FIG. 1 is a schematic view showing an operation input system as mounted on a vehicle;
FIG. 2 is a block diagram showing a schematic configuration of a navigation apparatus;
FIG. 3 is a block diagram showing a schematic configuration of the operation input system;
FIG. 4 is a perspective view of a touch pad provided in an operation input device;
FIG. 5 is a sectional view showing the configuration of a drive mechanism;
FIG. 6 shows an example of operation input performed utilizing the operation input system;
FIG. 7 shows an example of operation input performed utilizing the operation input system;
FIG. 8 shows an example of operation input performed utilizing the operation input system;
FIG. 9 shows an example of operation input performed utilizing the operation input system;
FIG. 10 is a flowchart showing the overall process procedures of an operation input reception process;
FIG. 11 is a flowchart showing the process procedures of a first protrusion height determination process;
FIG. 12 is a flowchart showing the process procedures of a first input determination process;
FIG. 13 is a flowchart showing the process procedures of an operation figure specifying process;
FIG. 14 is a flowchart showing the process procedures of a second protrusion height determination process;
FIG. 15 is a flowchart showing the process procedures of a second input determination process;
FIG. 16 shows another example of operation input performed utilizing the operation input system;
FIG. 17 shows another example of operation input performed utilizing the operation input system; and
FIG. 18 shows another example of operation input performed utilizing the operation input system.

### DETAILED DESCRIPTION OF THE EMBODIMENTS

An operation input system according to an embodiment of the present invention will be described with reference to the drawings. In the embodiment, an operation input system 3 configured to perform (predetermined) operation input prescribed in advance to a navigation system (in the example, an in-vehicle navigation apparatus 1) is described. The operation input system 3 includes a display input device 40 and an operation input device 4 communicably connected to the navigation apparatus 1. In the following, a schematic configuration of the navigation apparatus 1, a schematic configuration of the operation input device 4, the configuration of the operation input system 3, and the procedures of an operation input reception process will be described sequentially in this order.

### 1. Schematic Configuration of Navigation Apparatus

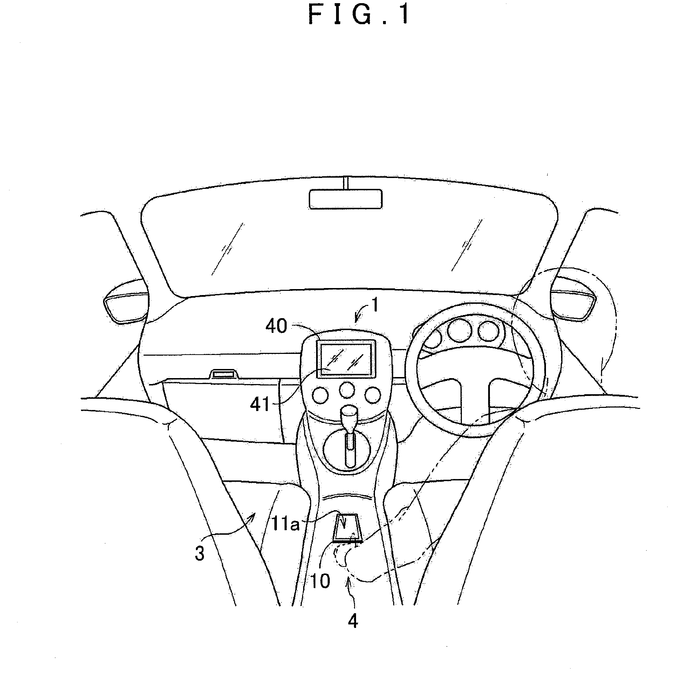

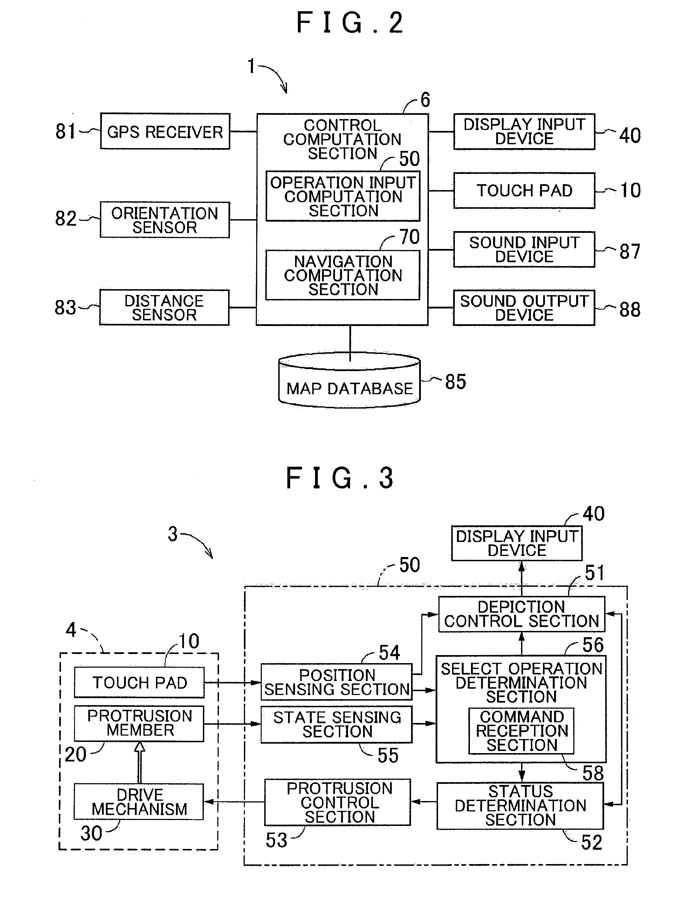

A schematic configuration of the navigation apparatus 1 will be described with reference to FIGS. 1 and 2. The navigation apparatus 1 is configured to achieve basic functions such as displaying the vehicle position, searching for a route from a departure place to a destination, providing route guidance, and searching for a destination. To this end, the navigation apparatus 1 includes a control computation section 6 as shown in FIG. 2. The control computation section 6 includes an arithmetic processing unit such as a CPU as its core member, and may be implemented by hardware, software, or a combination of both as a functional section configured to perform various processes on input data. The control computation section 6 includes a navigation computation section 70. In addition, the control computation section 6 is communicably connected to a GPS receiver 81, an orientation sensor 82, a distance sensor 83, a map database 85, the display input device 40, the touch pad 10, a sound input device 87, and a sound output device 88.

The GPS receiver 81 receives GPS signals from Global Positioning System (GPS) satellites. The orientation sensor 82 detects the orientation of travel of the vehicle or variations in orientation of travel of the vehicle. The distance sensor 83 detects the vehicle speed and the travel distance of the vehicle. As well known, the navigation computation section 70 can derive an estimated vehicle position on the basis of information obtained from the GPS receiver 81, the orientation sensor 82, and the distance sensor 83, and further on the basis of map matching known in the related art.

The map database 85 stores map data divided for each predetermined partition. The map data include road network data including the connection relationship between a plurality of nodes corresponding to intersections and a plurality of links corresponding to roads connecting between the nodes. Each node has information on its position on the map expressed by the latitude and the longitude. Each link has information such as the road type, the length of the link, and the road width as its attribute information. The map database 85 is referenced by the navigation computation section 70 during execution of processes such as displaying a map, searching for a route, and map matching. The map database 85 is stored in a storage medium such as a hard disk drive, a flash memory, or a DVD-ROM.

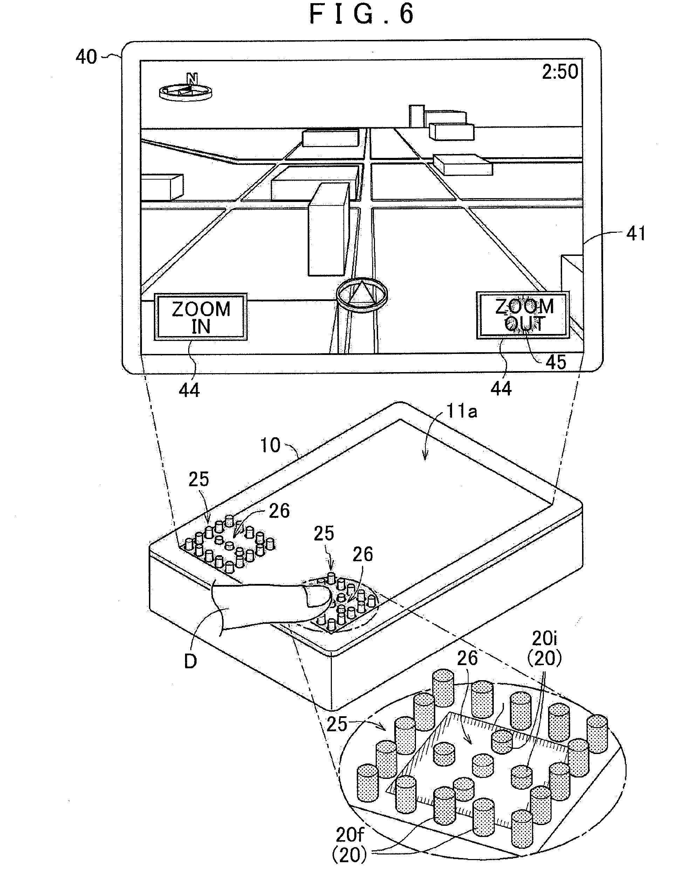

The display input device 40 is formed by integrating a display device such as a liquid crystal display device and an input device such as a touch panel. The display input device 40 includes a display screen 41, and displays on the display screen 41 a map of an area around the vehicle, images such as an operation figure 44 (see FIG. 6) associated with a predetermined function, and so forth, for example. In the embodiment, the display input device 40 corresponds to the "display device" according to the present invention. The operation figure 44 is a figure displayed on the display screen 41 to make it easy for the user (a passenger of the vehicle) to perceive a particular function to be achieved by operating the touch panel or the touch pad 10 to transfer operation input to the navigation apparatus 1. Examples of the operation figure 44 include operation icons, operation buttons, and character keys depicted as illustrations or the like. The display input device 40 senses an object to be sensed in contact with or in proximity to the touch panel to receive input corresponding to the position of the sensed object. For example, the user may bring the object to be sensed such as a fingertip or the tip of a stylus pen in contact with or in proximity to the operation figure 44 displayed on the display screen 41 to select the operation figure 44 and achieve a function associated with the operation figure 44. In addition, the user may bring the object to be sensed in contact with or in proximity to a position other than the operation figure 44 displayed on the display screen 41 to select a location on a map, for example.

As shown in FIG. 1, the touch pad 10 is provided separately from the display input device 40. The touch pad 10 includes an operation surface 11a formed as a single flat surface, and senses an object to be sensed D (see FIG. 6) in contact with or in proximity to the operation surface 11a to receive input corresponding to the position of the sensed object. An operation cursor 45 (see FIG. 6) is displayed on the display screen 41 in correspondence with the position of the object sensed by the touch pad 10 serving as a pointing device. The user slides the object to be sensed D such as a fingertip in contact with or in proximity to the operation surface 11a to move the operation cursor 45 on the display screen 41. Then, the user may perform a predetermined operation on the operation surface 11a with the operation cursor 45 located over the operation figure 44 to select the operation figure 44 and achieve a function associated with the operation figure 44. In addition, the user may perform a predetermined operation on the operation surface 11a with the operation cursor 45 located over a position other than the operation figure 44 displayed on the display screen 41 to select a location on a map, for example.

The display input device 40 is disposed at a position at which the display input device 40 may be seen without the need for the user (in particular, the driver of the vehicle) to significantly change his/her viewing direction during drive so as to be easily seeable by the user. In the example shown in FIG. 1, the display input device 40 is disposed at the center portion of the upper surface of a dashboard. However, the display input device 40 may be disposed in an instrument panel, for example. Meanwhile, the touch pad 10 is disposed at a position close to the hand of the user so as to be easily operable by the user. That is, the touch pad 10 is disposed at a position closer to the hand of the user and farther from the viewing direction than the display input device 40. In the example shown in FIG. 1, the touch pad 10 is disposed at a center console portion. However, the touch pad 10 may be disposed at the center portion of the upper surface of a dashboard, at a spoke portion of a steering wheel, or on a door panel, for example.

The sound input device 87 receives voice input from the user. The sound input device 87 includes a microphone or the like. The navigation computation section 70 may achieve functions such as searching for a destination through voice recognition and making a handsfree call on the basis of voice received through the sound input device 87. The sound output device 88 includes a speaker or the like. The navigation computation section 70 may achieve functions such as providing voice guidance via the sound output device 88.

### 2. Configuration of Operation Input Device

As shown in FIGS. 3 to 5, the operation input device 4 includes the touch pad 10, protrusion members 20, and drive mechanisms 30. The operation input device 4 is schematically configured such that the protrusion members 20 driven by the drive mechanisms 30 can protrude (appear and disappear) from the surface of the touch pad 10.

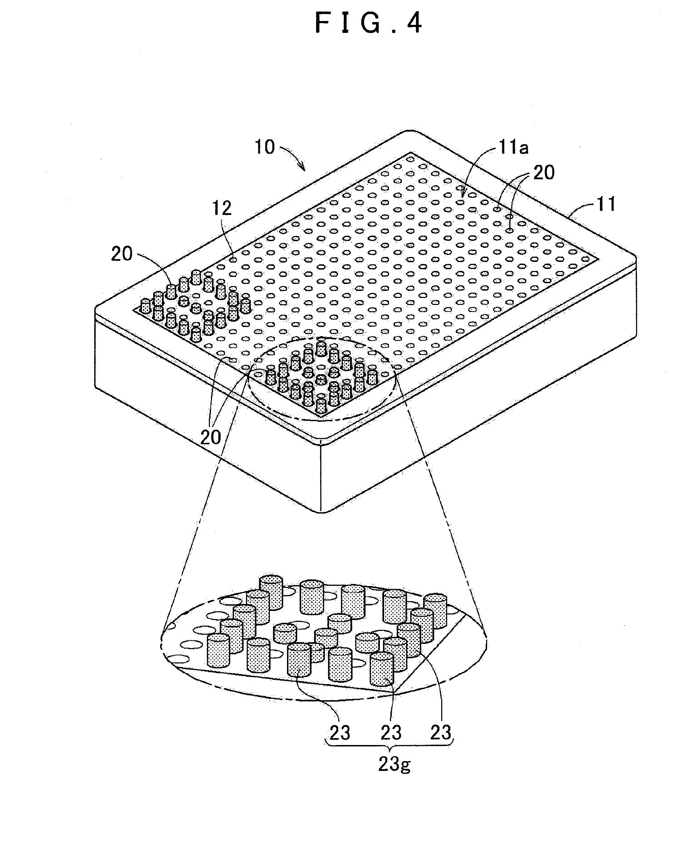

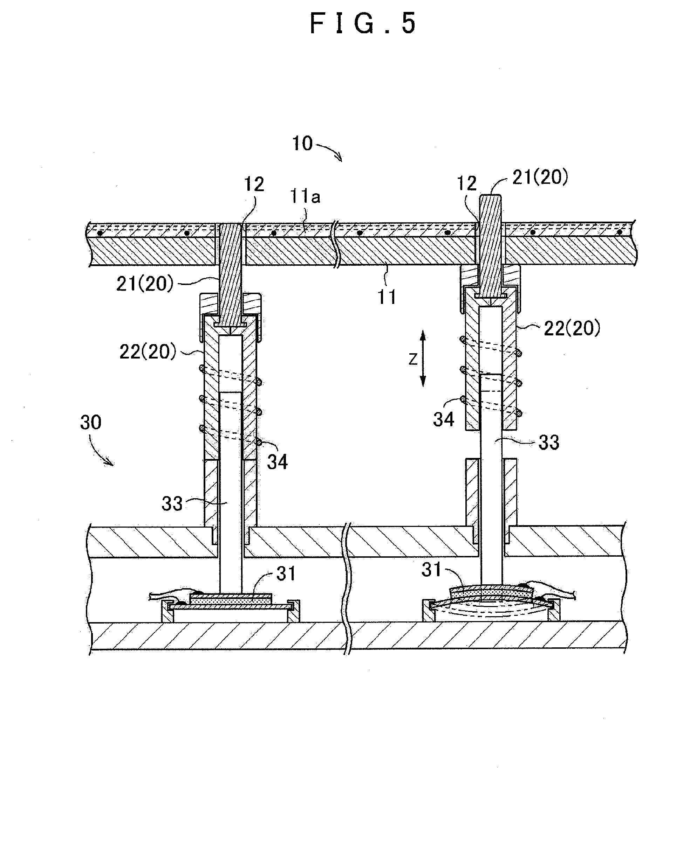

As shown in FIGS. 4 and 5, the touch pad 10 includes an operation plate 11, and the operation surface 11a is formed on the surface of the operation plate 11. The thus configured touch pad 10 may be of a variety of types such as a resistance film type and a capacitance type. In the example, the touch pad 10 is of the capacitance type. A substrate and an electrode layer are provided on the back surface side of the operation surface 11a. The touch pad 10 senses the object to be sensed D such as a fingertip in contact with or in proximity to the operation surface 11a to receive input corresponding to the position of the sensed object.

The operation plate 11 is provided with a hole portion 12 that penetrates through the operation plate 11. In the embodiment, a plurality (in the example, multiplicity) of such hole portions 12 are provided. The plurality of hole portions 12 are arranged in accordance with a predetermined rule along the operation surface 11a. In the example, the plurality of hole portions 12 are arranged regularly at constant intervals in each of the vertical and horizontal directions over the entire operation surface 11a, and arranged in a matrix (orthogonal grid) as a whole. Each of the hole portions 12 is formed to have a circular shape as seen from the surface side of the operation plate 11.

The protrusion member 20 is inserted into each of the hole portions 12. Thus, in the example, a plurality (multiplicity) of protrusion members 20 is also provided. Specifically, the number of the protrusion members 20 is the same as the number of the hole portions 12. In addition, the plurality of protrusion members 20 is arranged in accordance with a predetermined rule along the operation surface 11a. In the example, the plurality of protrusion members 20 are arranged regularly at constant intervals in each of the vertical and horizontal directions over the entire operation surface 11a, and arranged in a matrix as a whole.

As shown in FIG. 5, the protrusion member 20 includes a pin member 21 formed in the shape of an elongated circular column (pin) and a tubular member 22 that is generally cylindrical. The diameter of the pin member 21 is slightly smaller than the diameter of the hole portion 12. The lower end portion of the pin member 21 is retained by the protrusion member 22. In the example, the distal end portion (upper end portion) of the pin member 21 is inserted into each of the hole portions 12. In a reference state (state on the left side of FIG. 5) in which the protrusion member 20 is not driven by the drive mechanism 30, the distal end portion (distal end surface) of the pin member 21 which is formed to be flat is flush with the level of the operation surface 11a.

As shown in FIG. 5, the drive mechanism 30 is provided on the back surface side with respect to the operation plate 11. The drive mechanism 30 is configured to cause advancing/retracting operation of the protrusion member 20 along a direction (referred to as "advancing/retracting operation direction Z") intersecting (in the example, orthogonally intersecting) the operation surface 11a. The drive mechanism 30 includes a piezoelectric element 31.

The piezoelectric element 31 is a passive element that utilizes a piezoelectric effect, and converts a voltage applied to a piezoelectric body into a force, or converts an external force applied to the piezoelectric body into a voltage. The piezoelectric element 31 is provided to vibrate in the protrusion direction Z. A coupling member 33 is coupled to the piezoelectric element 31 to vibrate together with the piezoelectric element 31. The coupling member 33 is formed in the shape of an elongated circular column (pin). The distal end portion of the coupling member 33 opposite to the side on which the coupling member 33 is coupled to the piezoelectric element 31 is inserted into a space inside the tubular member 22. The diameter of the coupling member 33 is substantially equal to the inside diameter of the tubular member 22. The outer peripheral surface of the coupling member 33 and the inner peripheral surface of the tubular member 22 contact each other.

A spring member 34 is provided at a position at which the coupling member 33 and the tubular member 22 contact each other so as to surround the tubular member 22 from the outer peripheral side. The spring member 34 provides an inward preliminary pressure with a predetermined magnitude to cause a predetermined friction force between the coupling member 33 and the tubular member 22 forming the protrusion member 20. The preliminary pressure applied by the spring member 34 is set such that the static friction force between the coupling member 33 and the tubular member 22 is at least larger than a component of a gravitational force acting on the protrusion member 20 in the protrusion direction Z. In addition, the preliminary pressure is set such that the coupling member 33 and the tubular member 22 can slide with respect to each other with a dynamic friction force caused between the coupling member 33 and the tubular member 22 along with vibration of the piezoelectric element 31.

In the embodiment, in addition, the magnitude relationship between the speed of vibration of the piezoelectric element 31 to one side along the protrusion direction Z and the speed of vibration of the piezoelectric element 31 to the other side can be adjusted by a protrusion control section 53 (see FIG. 3) included in an operation input computation section 50 to be discussed later. More specifically, when the speed of vibration to the protrusion direction side (surface side with respect to the operation surface 11a) is lower than the speed of vibration to the retraction direction side (back surface side with respect to the operation surface 11a), which is opposite to the protrusion direction side, the protrusion member 20 is moved to the protrusion direction side on the basis of the difference between the static friction and the dynamic friction caused between the coupling member 33 and the tubular member 22. This allows the distal end portion of the protrusion member 20 (pin member 21) to be protruded to the surface side with respect to the operation surface 11a. That is, the protrusion member 20 may be brought into a state (protruded state) in which the distal end portion of the protrusion member 20 penetrates through the operation plate 11 to be protruded to the surface side with respect to the operation surface 11a. The protruded state is a state in which the distal end portion of the protrusion member 20 is above the operation surface 11a along the protrusion direction Z. In the following, the distal end portion of the protrusion member 20 in the protruded state on the protrusion direction side is referred to as "protrusion distal end portion 23".

When the speed of vibration to the retraction direction side is lower than the speed of vibration to the protrusion direction side, on the other hand, the protrusion member 20 is moved to the retraction direction side. That is, the protrusion member 20 may be brought into a state (retracted state) in which the distal end portion of the protrusion member 20 is retracted to the back surface side with respect to the operation surface 11a. The "retracted state" includes a state in which the distal end portion of the pin member 21 of the protrusion member 20 is flush with the level of the operation surface 11a. The retracted state is a state in which the distal end portion of the protrusion member 20 is not above the operation surface 11a along the protrusion direction Z, and corresponds to the "second state" according to the present invention.

In the embodiment, the drive mechanism 30 can bring the corresponding protrusion member 20 into the protruded state at a desired protrusion height (protrusion amount). The drive mechanism 30 is configured to be able to change the protrusion height of the protrusion member 20 stepwise. Such a configuration may be implemented by providing a movement restriction mechanism (not shown) that restricts movement of the protrusion member 20 to the protrusion direction side at a desired one of a plurality of different positions, for example.

The plurality of protrusion members 20 can be thus independently moved between the protruded state and the retracted state by the drive mechanism 30. A desired concave-convex shape can be expressed by the multiplicity of protrusion members 20 provided over the entire operation surface 11a so as to freely appear and disappear.

### 3. Configuration of Operation Input System

As shown in FIG. 3, the operation input system 3 includes the operation input device 4 discussed above, the display input device 40, and the operation input computation section 50 interposed between the operation input device 4 and the display input device 40. In the embodiment, the operation input computation section 50 is incorporated in the control computation section 6 forming the navigation apparatus 1 (see FIG. 2). It should be noted, however, that the present invention is not limited to such a configuration, and that the operation input computation section 50 may be provided independently of the control computation section 6. The operation input device 4 and the display input device 40 are communicably connected to each other via the operation input computation section 50.

The operation input computation section 50 includes a depiction control section 51, a status determination section 52, the protrusion control section 53, a position sensing section 54, a state sensing section 55, and an operation determination section 56.

The depiction control section 51 controls depiction of an image to be displayed on the display screen 41. The depiction control section 51 generates a plurality of layers containing images of a background, roads, names of places, etc. around the vehicle position. In addition, the depiction control section 51 generates a layer containing an image of a vehicle position mark representing the current position of the vehicle, and a layer containing an image of a route for guidance to a destination in the case where such a destination is set. Further, the depiction control section 51 generates a layer containing images of the predetermined operation figures 44, and a layer containing an image of the predetermined operation cursor 45. Then, the depiction control section 51 superimposes the generated layers to generate a single display image, and causes the display screen 41 to display the generated image (see FIGS. 6 to 8).

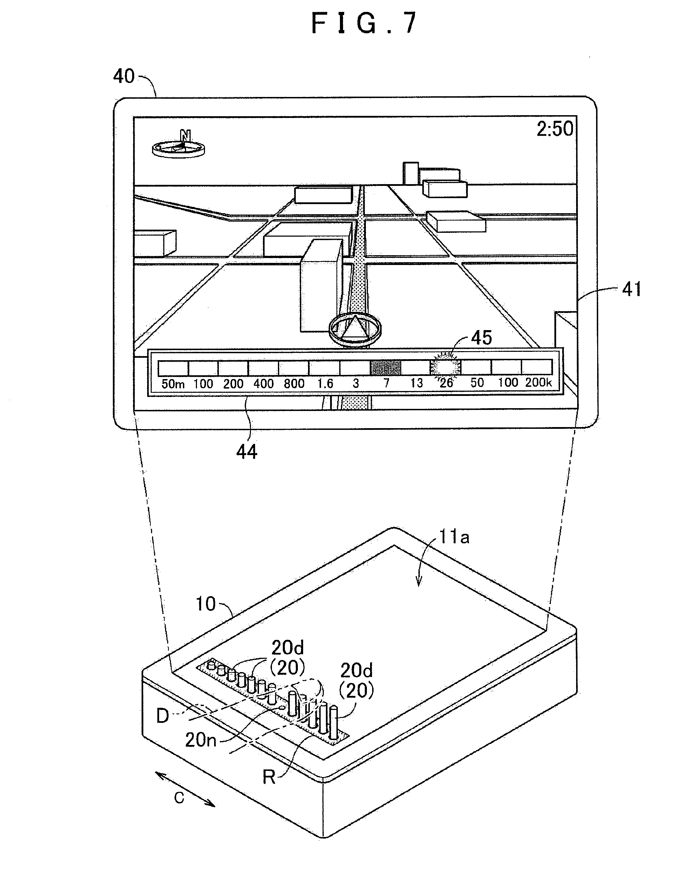

The depiction control section 51 causes the operation figure 44 to be displayed on the display screen 41 depending on a request from the user, the running state of the vehicle, or the like. The depiction control section 51 appropriately displays and hides the various types of the operation figures 44 depending on the situation. In the example shown in FIG. 6, operation buttons (in the illustrated example, a zoom-out button and a zoom-in button) for commanding a change in scale of a map image are displayed as examples of such operation figures 44. In the example shown in FIG. 7, an operation slider for commanding a change in scale of a map image is displayed as an example of such operation figures 44. The depiction control section 51 can redraw the map image by regenerating a layer containing images of roads in accordance with the scale specified using the operation buttons, the operation slider, etc. This enables the display input device 40 to switch display of the map image in accordance with the specified scale.

In addition, the depiction control section 51 appropriately displays and hides the operation cursor 45 in accordance with a request from the user. In the embodiment, in the case where contact of the object to be sensed D with or proximity of the object to be sensed D to the operation surface 11a is not sensed, the depiction control section 51 hides the operation cursor 45. In the case where contact of the object to be sensed D with or proximity of the object to be sensed D to the operation surface 11a is sensed, on the other hand, the depiction control section 51 displays the operation cursor 45, which has a circular shape in the example, at a position on the display screen 41 corresponding to the sensed position on the operation surface 11a. In the example, the operation cursor 45 is displayed such that the sensed position and the center position of the operation cursor 45 coincide with each other. In the case where the object to be sensed D in contact with or in proximity to the operation surface 11a is slid and the sensed position is also slid, the operation cursor 45 being displayed is also moved on the display screen 41 synchronously.

The status determination section 52 determines a protrusion status representing the state of protrusion of each of the protrusion members 20 in accordance with the image content displayed on the display screen 41. The protrusion status is set as desired between a "minimally displaced state" and a "maximally displaced state". In the "minimally displaced state", the protrusion member 20 has been moved most to the back surface side of the operation surface 11a within its movable range in the protrusion direction Z (a state in which the distal end portion of the pin member 21 is flush with the level of the operation surface 11a). In the "maximally displaced state", the protrusion member 20 has been moved most to the surface side of the operation surface 11a in its movable range in the protrusion direction Z. In the embodiment, the protrusion status is set stepwise, for example in a plurality of steps such as four steps, eight steps, and sixteen steps, between the minimally displaced state and the maximally displaced state. In the case where the protrusion status is set in sixteen steps, for example, the status determination section 52 determines the protrusion status of each protrusion member 20 to be represented by an integer from "0" representing the minimally displaced state to "15" representing the maximally displaced state. The protrusion member 20 having a protrusion status of "0" is brought into the retracted state. The protrusion member 20 having a protrusion status of "1" to "15" is brought into the protruded state at a protrusion height corresponding to the protrusion status.

As discussed above, the display screen 41 may display images of the operation figures 44 (operation buttons in FIG. 6) associated with predetermined functions. In such a case, the status determination section 52 correlates the coordinates of the display screen 41 and the coordinates of the operation surface 11a, and decides the protrusion status of a plurality of protrusion members 20 positioned at the coordinates on the operation surface 11a corresponding to the coordinates on the display screen 41 of the operation figure 44 being displayed to be equal to or more than "1". In the embodiment, the protrusion status of a plurality of protrusion members 20 that are arranged to express a rectangular frame shape is decided to be "11" to "15" representing relatively large displacement. In the example, the protrusion status of the plurality of protrusion members 20 is decided to be "15" representing the maximally displaced state.

In addition, the status determination section 52 also decides the protrusion status of in-frame protrusion members 20i to be equal to or more than "1". The in-frame protrusion members 20i are one or more protrusion members 20 positioned in an in-frame region I surrounded by the plurality of protrusion members 20 arranged in the frame shape as described above. In the embodiment, the protrusion status of the one or more in-frame protrusion members 20i that may be arranged to express a shape (such as ○, △, □, +, and -, for example) corresponding to the content of the operation figure 44 is determined to be "5" to "10" representing intermediate displacement between the minimally displaced state and the maximally displaced state, for example. In this case, in the case where a plurality of operation figures 44 are displayed on the display screen 41, the protrusion status decided for each group of in-frame protrusion members 20i corresponding to each operation figure 44 may be different depending on the content of the operation figure 44.

The status determination section 52 decides the protrusion status of the in-frame protrusion members 20i that do not contribute to expressing a predetermined shape corresponding to the content of the operation figure 44 to be "0" representing the minimally displaced state. In addition, the status determination section 52 also decides the protrusion status of the protrusion members 20 positioned at the coordinates on the operation surface 11a corresponding to the coordinates on the display screen 41 of a region in which no operation figure 44 is displayed to be "0".

In the embodiment, in addition, an image of the operation slider such as that shown in FIG. 7 may also be displayed as a type of the operation figure 44 associated with a predetermined function. In the example, the operation slider is intended to receive a command for a change in scale of a map image. The magnitude (amount) of the scale is adjusted on the basis of the command from the user, and thus the scale serves as a type of the "adjustment amount" according to the present invention. In addition, the navigation apparatus 1 to which a set value of the scale serving as the adjustment amount is input serves as a type of the "adjustment subject" according to the present invention, and serves as the "particular adjustment subject" in the example. Examples of the "adjustment subject" include an in-vehicle audio system and an air conditioner besides the navigation apparatus 1. In the case where the "adjustment subject" is an audio system, volume may serve as the "adjustment amount". In the case where the "adjustment subject" is an air conditioner, temperature and air volume may serve as the "adjustment amount".

In the case where a reception image indicating that input of a command for the adjustment amount is acceptable, such as an image of the operation slider described above, for example, is displayed on the display screen 41, the status determination section 52 correlates the coordinates of the display screen 41 and the coordinates of the operation surface 11a, and decides the protrusion status of a plurality of protrusion members 20 positioned in a set region R (see FIG. 7) on the operation surface 11a corresponding to a region on the display screen 41 of the operation figure 44 (operation slider) included in the reception image to be equal to or more than "1". In the embodiment, the protrusion status of each of the plurality of protrusion members 20 disposed in the set region R is decided so as to become larger regularly and stepwise along a predetermined reference direction C set along the operation surface 11a. That is, the protrusion status of each of the plurality of protrusion members 20 disposed in the set region R is decided such that the protrusion status of the plurality of protrusion members 20 becomes larger stepwise in accordance with the position along the reference direction C. It should be noted, however, that the status determination section 52 decides the protrusion status of a current-value protrusion member 20n to be "0". The current-value protrusion member 20n is one of the plurality of protrusion members 20 disposed in the set region R that corresponds to the current value of the adjustment amount (scale).

The protrusion control section 53 controls the position of the protrusion member 20 with respect to the operation surface 11a in the protrusion direction Z. The protrusion control section 53 controls the drive mechanism 30 on the basis of the information received from the status determination section 52. In the embodiment, the protrusion control section 53 controls the state of the movement restriction mechanism in accordance with the protrusion status and vibrates the piezoelectric element 31 by applying a pulsed voltage for each protrusion member 20. The protrusion control section 53 is configured to adjust the magnitude relationship between the speed of vibration to one side along the protrusion direction Z and the speed of vibration to the other side. Such a configuration may be achieved by changing the duty ratio in accordance with the direction of vibration of the piezoelectric element 31. The protrusion control section 53 moves the protrusion member 20 to the protrusion direction side by making the speed of vibration to the protrusion direction side lower than the speed of vibration to the retraction direction side. On the other hand, the protrusion control section 53 moves the protrusion member 20 to the retraction direction side by making the speed of vibration to the retraction direction side lower than the speed of vibration to the protrusion direction side.

As discussed above, the results of the determination performed by the status determination section 52 are based on whether or not a predetermined operation figure 44 is displayed on the display screen 41, and the content of the operation figure 44 displayed. Therefore, by controlling the drive mechanism 30 on the basis of the determination results, the protrusion control section 53 correlates the coordinates of the display screen 41 and the coordinates of the operation surface 11a, and in the case where a particular operation figure 44 is displayed on the display screen 41, the protrusion control section 53 forms a frame-like protrusion portion 25 having a frame shape, which is formed by a protrusion distal end portion group 23 g formed from the protrusion distal end portions 23 of a plurality of protrusion members 20 (frame-forming protrusion members 20f), at coordinates on the operation surface 11a corresponding to the coordinates of the operation figure 44 as shown in FIG. 6. In addition, the protrusion control section 53 forms an in-frame protrusion portion 26 having a shape corresponding to the content of the operation figure 44, which is formed by a protrusion distal end portion group 23g formed from the protrusion distal end portions 23 of one or more in-frame protrusion members 20i positioned in the in-frame region I surrounded by the frame-like protrusion portion 25. The protrusion control section 53 sets the protrusion height of each of the frame-forming protrusion members 20f forming the frame-like protrusion portion 25 and the in-frame protrusion members 20i positioned in the in-frame region I to form the in-frame protrusion portion 26 depending on the content of the operation figure 44. In FIG. 6, only the frame-forming protrusion members 20f and the in-frame protrusion members 20i brought into the protruded state are shown, and the protrusion members 20 brought into the retracted state are not shown.

In the embodiment, the protrusion control section 53 makes the protrusion height of the frame-forming protrusion members 20f and the protrusion height of the in-frame protrusion members 20i different from each other. More specifically, the protrusion height of all the frame-forming protrusion members 20f is set to the maximum protrusion height, and the protrusion height of the in-frame protrusion members 20i is set to an intermediate protrusion height or "0" depending on the content of the operation figure 44. In the example, the protrusion height of the in-frame protrusion members 20i set to an intermediate protrusion height is uniform. An identification symbol having a predetermined shape (such as ○, △, □, +, and -, for example) is expressed by the protrusion distal end portion group 23g formed from the protrusion distal end portions 23 of the in-frame protrusion members 20i set to an intermediate protrusion height. Such a shape may correspond to the content of the operation figure 44. The shape expressed by the protrusion distal end portion group 23g, which corresponds to the content of the operation figure 44, is specifically determined by reading a file for the operation figure 44 when displaying the operation figure 44 on the display screen 41 and referencing attribute information included in the file to acquire the content of the operation figure 44.

In the example shown in FIG. 6, two operation buttons are displayed as the operation figures 44 on the display screen 41. Correspondingly, two rectangular frame-like protrusion portions 25 are formed on the operation surface 11a, and in-frame protrusion members 26 expressing a "+" mark and a "-" mark corresponding to the zoom-out button and the zoom-in button, respectively, are formed in the in-frame regions I surrounded by the frame-like protrusion portions 25.

In addition, the protrusion control section 53 performs protrusion height adjustment control in accordance with the results of the determination performed by the status determination section 52 in the case where a reception image (such as an image of the operation slider shown in FIG. 7) indicating that input of a command for the adjustment amount (scale) is acceptable is displayed on the display screen 41. In the protrusion height adjustment control, a plurality of protrusion members 20 (adjustment protrusion members 20d) disposed in a set region R set on the operation surface 11a are protruded such that the protrusion height of the plurality of adjustment protrusion members 20d is different stepwise in accordance with the position along the reference direction C. In FIG. 7, only the adjustment protrusion members 20d are shown, and the protrusion members 20 brought into the retracted state are not shown. In the embodiment, the protrusion height of each of the adjustment protrusion members 20d arranged so as to be varied regularly in protrusion height is defined as a "reference height Hs" for the adjustment protrusion member 20d. Thus, the reference height Hs is different for each of the plurality of adjustment protrusion members 20d in the set region R.

In the embodiment, the set region R is set at a position on the operation surface 11a corresponding to the position of the image of the operation slider on the display screen 41. In addition, the set region R is set to be horizontally long as seen from the surface side of the touch panel 10, and the protrusion height of each adjustment protrusion member 20d is set to become larger stepwise from one end (at the upper left in FIG. 7) toward the other end (at the lower right in FIG. 7) along the reference direction C. The magnitude of the protrusion height of each adjustment protrusion member 20d, the protrusion height of which is different stepwise along the reference direction C, corresponds to the magnitude of the value of the scale serving as the adjustment amount. Each adjustment protrusion member 20d may function as a medium for receiving a command for a value of the adjustment amount (a set value of the scale).

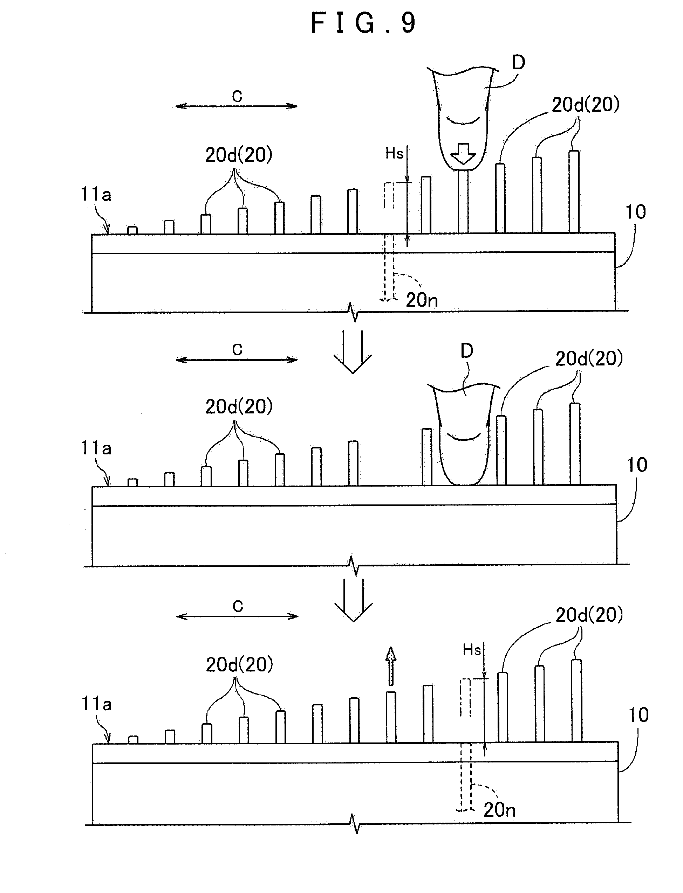

The protrusion control section 53 makes the protrusion height of the current-value protrusion member 20n corresponding to the current value of the adjustment amount (current scale value), among the plurality of adjustment protrusion members 20d disposed in the set region R, different from the reference height Hs (see FIG. 9) corresponding to the current value of the adjustment amount. In the embodiment, the protrusion control section 53 brings the protrusion height of the current-value protrusion member 20n to the minimum protrusion height (that is, "0") irrespective of the reference height Hs corresponding to the current value of the adjustment amount. Consequently, the protrusion height of the plurality of adjustment protrusion members 20d disposed in the set region R is varied regularly along the reference direction C as a whole, and varied irregularly at the position of the current-value protrusion member 20n. Allowing the user to recognize such an irregularity through tactile sensation allows the user to recognize the current value of the adjustment amount without closely watching the display screen 41.

The protrusion control section 53 executes the protrusion height adjustment control while a reception image indicating that input of a command for the adjustment amount is acceptable is displayed on the display screen 41. In the case where the reception image is hidden, the protrusion status of all the adjustment protrusion members 20d disposed in the set region R is brought to "0", and the protrusion height of all the adjustment protrusion members 20d is also brought to "0" which is the minimum protrusion height.

In a configuration in which the movement restriction mechanism is provided as in the embodiment, the protrusion control section 53 vibrates the piezoelectric element 31 for a predetermined time longer than the time required to switch the protrusion height of the protrusion member 20 between the minimum protrusion height and the maximum protrusion height, and thereafter stops the vibration. That is, a voltage is applied to the piezoelectric element 31 only for the predetermined time, and thereafter application of the voltage is stopped. Even after application of the voltage is stopped, the protrusion member 20 maintains its position in the protrusion direction Z through static friction between the coupling member 33 and the tubular member 22.

The position sensing section 54 acquires a sensed position of the object to be sensed D on the operation surface 11a of the touch pad 10. The position sensing section 54 specifies the position of an electrode most approached by the object to be sensed D on the basis of variations in capacitance of the electrodes caused when the object to be sensed D such as a fingertip is brought into contact with or into proximity to the operation surface 11a. Then, the position sensing section 54 acquires the specified position of the electrode as the sensed position on the operation surface 11a. The touch pad 10 may receive input corresponding to the sensed position on the operation surface 11a through such a function of the position sensing section 54. The position sensing section 54 outputs information on the acquired sensed position to the depiction control section 51 and the operation determination section 56.

The state sensing section 55 senses the protruded state and the retracted state of the protrusion members 20. The state sensing section 55 is configured to acquire information from a position sensor (not shown), for example. The state sensing section 55 senses whether the actual protrusion status of each protrusion member 20 is the protruded state or the retracted state on the basis of the acquired information on the position of the protrusion member 20 in the protrusion direction Z. The state sensing section 55 outputs information on the sensing results to the operation determination section 56.

The operation determination section 56 determines predetermined operation input performed to the navigation apparatus 1 etc. by the user at least on the basis of a predetermined operation performed on the operation surface 11a. In the embodiment, examples of the "predetermined operation" serving as a determination criterion include an operation of bringing the object to be sensed D, which has not been in contact with the operation surface 11a, into contact with the operation surface 11a (touch operation), an operation of temporarily moving the object to be sensed D, which has been in contact with the operation surface 11a, away from the operation surface 11a and thereafter bringing the object to be sensed D into contact with the operation surface 11a again (tap operation), and an operation of performing two tap operations within a predetermined time (double-tap operation). In the embodiment, examples of the "predetermined operation" also include a depression operation for the protrusion member 20. The depression operation is an operation of depressing the protrusion member 20 which has been in the protruded state toward the operation surface 11a.

The operation determination section 56 determines predetermined operation input performed to the navigation apparatus 1 etc. by the user on the basis of the position on the operation surface 11a at which the predetermined operation is performed. Examples of the operation input performed to the navigation apparatus 1 by the user include selecting a particular location in a map displayed on the display screen 41, and selecting a particular function associated with an operation figure 44 displayed on the display screen 41. In the case where the predetermined operation described above is performed in a region (referred to as "non-figure region") on the operation surface 11a corresponding to a region on the display screen 41 other than the operation figures 44, the operation determination section 56 determines that the location on the display screen 41 corresponding to the position at which the predetermined operation described above is sensed is selected. In this case, the operation determination section 56 outputs information representing the selected location to the depiction control section 51 to cause the depiction control section 51 to execute a process for scrolling a map image such that the selected location is centered.

In the case where the predetermined operation described above is performed at a position on the operation surface 11a corresponding to the position of the operation figure 44 on the display screen 41, the operation determination section 56 determines that the function associated with the operation figure 44 is selected. In the embodiment, the protrusion member 20 (the frame-forming protrusion member 20f and the in-frame protrusion member 20i) protrudes from the operation surface 11a at a predetermined protrusion height at a position on the operation surface 11a corresponding to the position of the operation figure 44 on the display screen 41. Thus, in the case where the touch panel 10 receives input performed in the in-frame region I along with a depression operation of depressing the protrusion member 20 (the frame-forming protrusion member 20f and the in-frame protrusion member 20i) protruding from the operation surface 11a toward the operation surface 11a, the operation determination section 56 determines that a select operation has been performed for the operation figure 44 corresponding to the position of the in-frame region I.

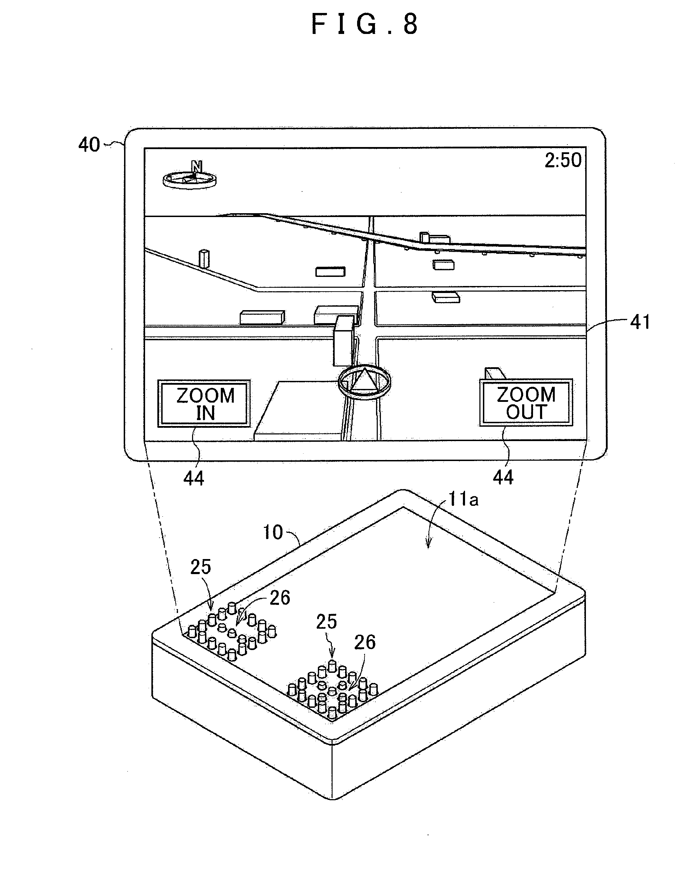

In FIG. 6, for example, in the case where the protrusion member 20 corresponding to the operation figure 44 serving as the zoom-out button is subjected to a depression operation so that the touch panel 10 receives input performed in the in-frame region I, a change is made to zoom out the map image being displayed (see FIG. 8).

In some cases, a plurality of operation figures 44 may be displayed on the display screen 41, and protrusion members 20 corresponding to the plurality of operation figures 44 may be disposed in proximity to each other. In other cases, the user may operate at a plurality of locations at the same time. In such cases, the touch panel 10 may receive input performed in a plurality of different in-frame regions I. In such a case, the operation determination section 56 determines that a select operation has been performed for the operation figure 44 corresponding to the position of the in-frame region I for which a larger number of protrusion members 20 have been subjected to a depression operation. In the embodiment, comparison is made for the total of the number of frame-forming protrusion members 20f subjected to a depression operation and the number of in-frame protrusion members 20i subjected to a depression operation, and it is determined that a select operation has been performed for the operation figure 44 for which the total is the larger.

In some cases, the number of protrusion members 20 subjected to a depression operation may be the same for the operation figures 44 as a result of the comparison. In such a case, the operation determination section 56 determines the selected operation figure 44 on the basis of a reference point of the in-frame region I and the sensed position of the object to be sensed D. The reference point of the in-frame region I is a representative point set at a position representing the in-frame region I, and may be the center, the center of gravity, or the like of the in-frame region I, for example. In the embodiment, the operation determination section 56 determines that a select operation has been performed for the operation figure 44 corresponding to the position of the in-frame region I, the reference point of which is the closer to the sensed position of the object to be sensed D.

Changes in scale performed through select operations using the operation buttons described above may be performed by only one step at a time. This is not particularly inconvenient during normal travel. However, in the case where a relatively far destination is set and a route for guidance to the destination is set, for example, it may be desired to significantly change the scale in order to check the entire route for guidance, check a detailed map of an area around the destination, or the like. In such a case, it is more convenient for the user to change the scale using the operation slider such as that shown in FIG. 7, rather than using the operation buttons. With this in view, in the embodiment, input for a change in scale performed using the operation slider is received when a route for guidance is set by the navigation computation section 70.

Correspondingly, in the embodiment, the operation determination section 56 includes a command reception section 58. The command reception section 58 receives input of a command for a value of the adjustment amount for a particular adjustment subject selected from a plurality of types of adjustment subjects. In the example, input of a command for a set value of the scale serving as the adjustment amount to the navigation apparatus 1 serving as the particular adjustment subject is received. In the embodiment, the command reception section 58 receives input of a command for a value of the adjustment amount by the medium of the plurality of protrusion members 20 (adjustment protrusion members 20d) disposed in the set region R such that the protrusion height of the protrusion members 20 is different stepwise along the reference direction C as a result of the protrusion height adjustment control. In the example, the scale for map display is defined as the adjustment amount, and set to have a larger value as the protrusion height of the corresponding adjustment protrusion member 20d is larger. A larger scale value represents a larger denominator of the reduction ratio with respect to the actual size, or a longer distance on a map corresponding to a unit length on the display screen 41.

In the case where a part of the adjustment protrusion members 20d in the set region R is depressed toward the operation surface 11a, the command reception section 58 receives input of a command for a value of the adjustment amount corresponding to the protrusion height set for the depressed adjustment protrusion member 20d. That is, as the protrusion height of the depressed adjustment protrusion member 20d is larger, input of a command for a larger set value of the scale is received. As the protrusion height of the depressed adjustment protrusion member 20d is smaller, input of a command for a smaller set value of the scale is received. Depression of the adjustment protrusion member 20d toward the operation surface 11a is determined on the basis of input received on the touch panel 10 in the set region R. That is, in the case where a predetermined operation such as a touch operation is sensed in the set region R, it is determined that the adjustment protrusion member 20d has been depressed toward the operation surface 11a.

In the case where the command reception section 58 receives input of a new set value of the scale, a map is redisplayed on the display screen 41 at a scale corresponding to the set value. In this event, as shown in FIG. 9, the protrusion control section 53 brings the protrusion height of the adjustment protrusion member 20d (the current-value protrusion member 20n before the change) corresponding to the previous value of the adjustment amount to the reference height Hs corresponding to its value of the adjustment amount. That is, the protrusion height of the adjustment protrusion member 20d is brought to the inherent protrusion height at the position along the reference direction C in the set region R. Meanwhile, the protrusion control section 53 brings the protrusion height of the adjustment protrusion member 20d (the current-value protrusion member 20n after the change) corresponding to the new value of the adjustment amount to "0" which is different from the reference height Hs corresponding to the new value of the adjustment amount.

### 4. Process Procedures of Operation Input Reception Process

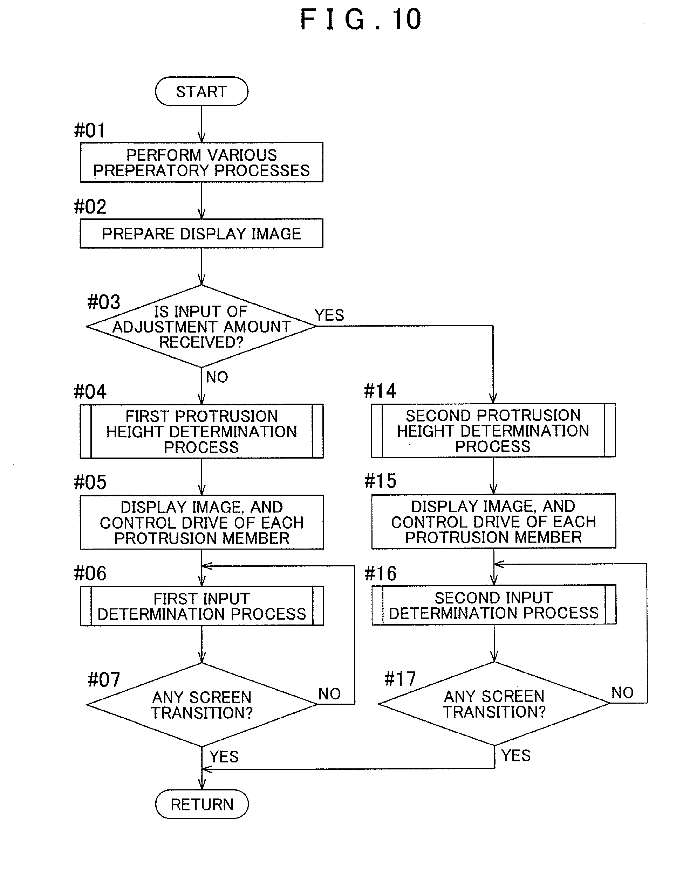

The process procedures of the operation input reception process performed by the operation input system 3 according to the embodiment will be described with reference to FIGS. 10 to 15. The procedures of the operation input reception process described below are executed by hardware or software (a program) implementing the functional sections of the operation input computation section 50, or a combination of both. In the case where the functional sections are implemented by a program, the arithmetic processing unit provided in the control computation section 6 including the operation input computation section 50 operates as a computer that executes the program implementing the functional sections.

In the operation input reception process, as shown in FIG. 10, first, various preparatory processes are executed (step #01). Examples of the preparatory processes include preparing a work area for preparing a display image. Next, a display image is actually prepared (step #02). Then, it is determined whether or not a reception image indicating that input of a command for the adjustment amount is acceptable is included in the prepared display image (step #03). In the case where a reception image is not included (step #03: No), the processes in step #04 to step #07 are executed.

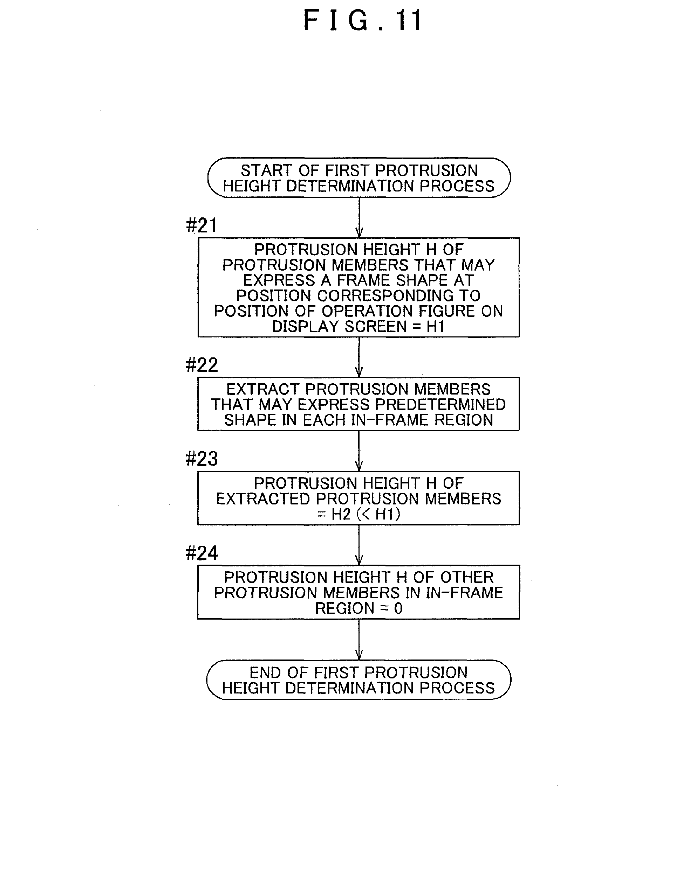

In step #04, a first protrusion height determination process is executed. In the first protrusion height determination process, as shown in FIG. 11, the protrusion height of protrusion members 20 (frame-forming protrusion members 20f) that may express a frame shape at a position corresponding to the position of the operation figure 44 on the display screen 41 is set to H1 which is the maximum protrusion height (step #21). The process in step #21 is equivalent to setting the protrusion status, which is set in sixteen steps as described above, to "15" which is the largest value. Next, protrusion members 20 (in-frame protrusion members 20i) that may express a predetermined shape corresponding to the content of the operation figure 44 in each in-frame region I are extracted (step #22). Then, the protrusion height of the extracted in-frame protrusion members 20i is set to H2 which is smaller than the maximum protrusion height (step #23). The process in step #23 is equivalent to setting the protrusion status to a value equal to or more than "1" and less than "15". Lastly, the protrusion height of the remaining in-frame protrusion members 20i is set to "0". The process in step #24 is equivalent to setting the protrusion status to "0". The first protrusion height determination process is thus terminated.

When the first protrusion height determination process is terminated, the process returns to FIG. 10. An image is displayed on the display screen 41 and the drive mechanism 30 drives the protrusion member 20 so as to be advanced and retracted (step #05) on the basis of the display image prepared in step #02 and the protrusion height (protrusion status) determined in step #04. This causes the protrusion members 20 corresponding to a particular operation figure 44 displayed on the display screen 41 to be brought into the protruded state. A first input determination process is executed in this state (step #06).

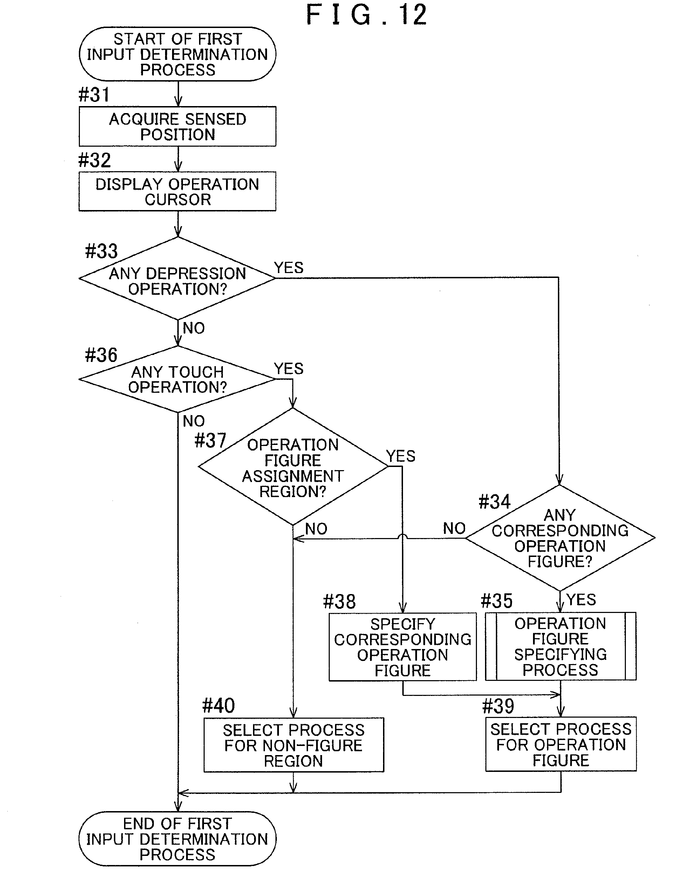

In the first input determination process, as shown in FIG. 12, a sensed position of the object to be sensed D on the operation surface 11a is acquired (step #31). The operation cursor 45 is displayed at a position on the display screen 41 corresponding to the acquired sensed position (step #32). In the case where the sensed position of the object to be sensed D is moved on the operation surface 11a, the operation cursor 45 being displayed is also moved on the display screen 41 accordingly. After that, it is determined whether or not a depression operation of depressing the protrusion member 20 (the frame-forming protrusion member 20f and the in-frame protrusion member 20i) which has been in the protruded state toward the operation surface 11a is performed (step #33). In the case where it is determined that a depression operation is performed (step #33: Yes), it is determined whether or not there is any operation figure 44 that corresponds to the protrusion member 20 subjected to the depression operation (step #34). In the case where there is any such operation figure 44 (step #34: Yes), an operation figure specifying process is executed (step #35).

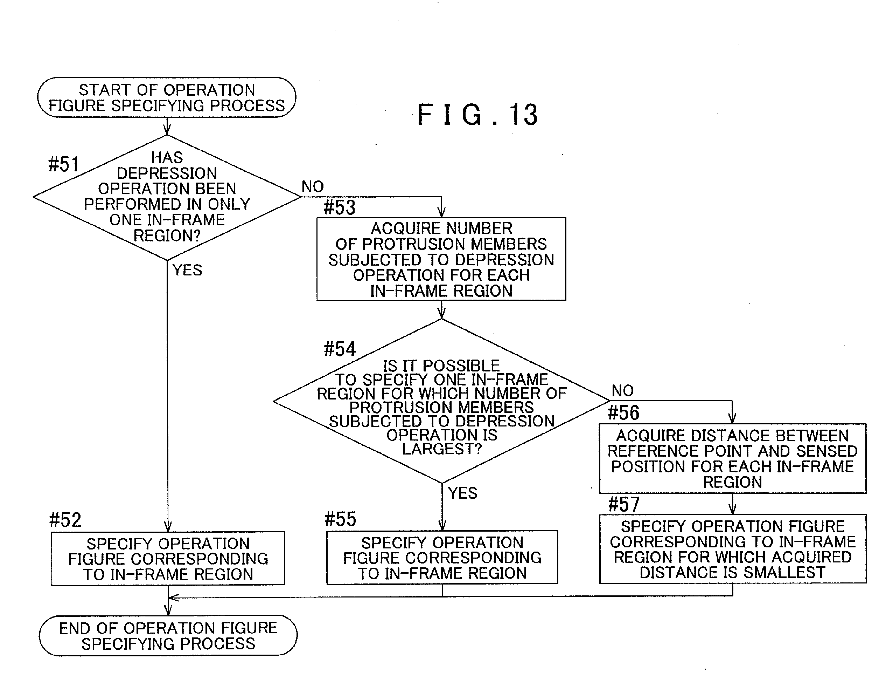

In the operation figure specifying process, as shown in FIG. 13, it is determined whether or not a depression operation has been performed in only one in-frame region I (step #51). In the case where a depression operation has been performed in only one in-frame region I (step #51: Yes), an operation figure 44 corresponding to the in-frame region I is specified (step #52). In the case where a depression operation has been performed in a plurality of in-frame regions I (step #51: No), the number of protrusion members 20 subjected to the depression operation is acquired for each in-frame region I (step #53). Then, it is determined whether or not it is possible to specify one in-frame region I for which the number of protrusion members 20 subjected to the depression operation is the largest (step #54). In the case where it is possible to specify one in-frame region I (step #54: Yes), an operation figure 44 corresponding to the in-frame region I is specified (step #55). In the case where it is not possible to specify one in-frame region I (step #54: No), the distance between a predetermined reference point and a sensed position of the object to be sensed is acquired for each in-frame region I (step #56). Then, an operation figure 44 corresponding to the in-frame region I for which the acquired distance is the smallest is specified (step #57). The operation figure specifying process is thus terminated.

Returning to FIG. 12, in the case where it is determined in step #33 that a depression operation is not performed (step #33: No), it is determined whether or not a touch operation (including a tap operation and a double-tap operation) is performed on the operation surface 11a (step #36). In the case where a touch operation is sensed (step #36: Yes), it is determined whether or not the position at which the touch operation is sensed falls within a region (operation figure assignment region) on the operation surface 11a corresponding to an operation figure 44 on the display screen 41 (step #37). In the case where it is determined that the position falls within the operation figure assignment region (step #37: Yes), an operation figure 44 corresponding to the operation figure assignment region is specified (step #38). Then, the operation figure 44 specified in step #35 or step #38 is selected, and the function associated with the selected operation figure 44 (such as a function for changing the scale of a map image, for example) is achieved (step #39). After that, the first input determination process is terminated.

In the case where it is determined in step #34 that there is no corresponding operation figure 44 (step #34: No), or in the case where it is determined in step #37 that the position does not fall within the operation figure assignment region (step #37: No), a selection process for a region (non-figure region) other than the operation figure assignment region is executed (step #40). For example, a process for scrolling a map image such that the position at which the touch operation is sensed is centered in the display screen 41 is executed. After that, the first input determination process is terminated. In the case where it is determined in step #36 that a touch operation is not performed (step #36: No), the first input determination process is terminated.

The thus configured first input determination process causes the protrusion member 20 (the frame-forming protrusion member 20f and the in-frame protrusion member 20i) corresponding to a particular operation figure 44 displayed on the display screen 41 to be brought into the protruded state. When the protrusion distal end portion 23 is retracted to the back surface side with respect to the operation surface 11a, a portion of the operation surface 11a around the protrusion distal end portion 23 is flat. When the protrusion distal end portion 23 is protruded to the surface side with respect to the operation surface 11a, the protrusion distal end portion 23 can be directly recognized through tactile sensation using a fingertip of the user etc. In addition, the user may easily associate the position of the protrusion member 20 on the operation surface 11a recognized through tactile sensation and the position of the operation figure 44 displayed on the display screen 41 with each other through comparison performed in his/her mind. The user may further perform a touch operation or the like at a desired position on the operation surface 11a in reliance on the protrusion member 20 recognized through tactile sensation at that position. This allows the user to easily select the desired operation figure 44 without seeing the touch pad 10 provided close to the hand of the user as a matter of course, or even with hardly seeing the display input device 40 provided at a position close to the viewing direction during drive. Thus, the operation input system 3 according to the embodiment enables to perform reliable operation input compared to the related art without closely watching the display screen 41.

In the embodiment, in addition, the frame-forming protrusion member 20f and the in-frame protrusion member 20i can be easily distinguished from each other on the basis of the difference in protrusion height. This allows the user to easily discriminate the boundary of an operation region on the operation surface 11a corresponding to the operation figure 44 displayed on the display screen 41 and a mark representing the content of the operation figure 44.

Returning to FIG. 10, in the case where a reception image indicating that input of a command for the adjustment amount is acceptable is included in the display image (step #03: Yes), the processes in step #14 to step #17 are executed. In step #14, a second protrusion height determination process is executed.

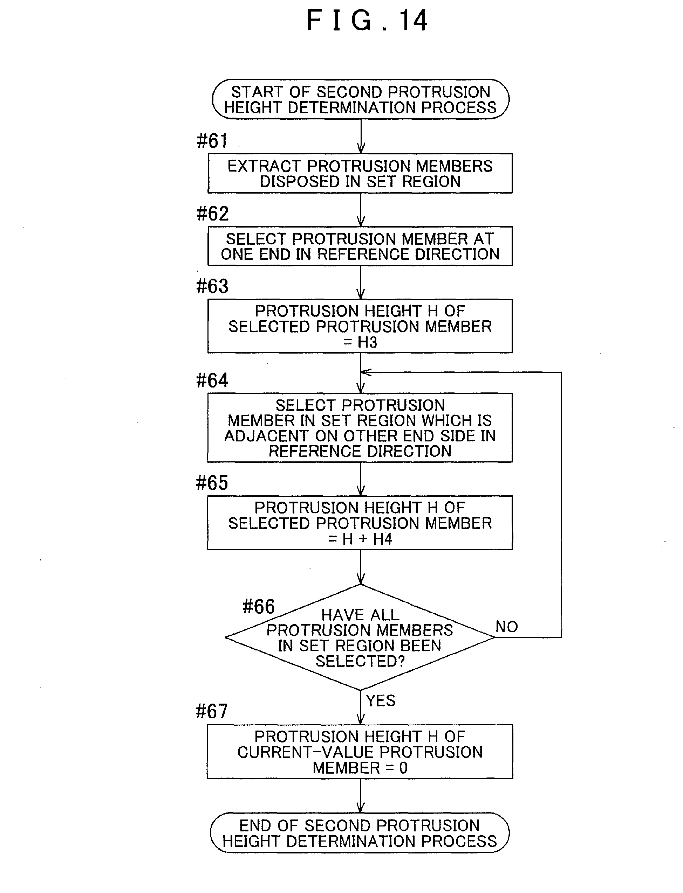

In the second protrusion height determination process, as shown in FIG. 14, a plurality of protrusion members 20 (adjustment protrusion members 20d) disposed in a predetermined set region R are extracted (step #61). The protrusion member 20 positioned at one end along the reference direction C is selected from the extracted protrusion members 20 (step #62). Then, the protrusion height of the selected protrusion member 20 is set to H3 which is one step larger than "0" which is the minimum protrusion height (step #63). The process in step #63 is equivalent to setting the protrusion status, which is set in sixteen steps as described above, to "1". Next, the protrusion member 20 in the set region R which is adjacent on the other end side in the reference direction C is selected (step #64). Then, the protrusion height of the selected protrusion member 20 is set to be H4 larger than the protrusion height of the protrusion member 20 which is adjacent on the one end side in the reference direction C, H4 corresponding to a height for a predetermined number of steps (step #65).

The processes in step #64 to step #66 are repeatedly executed while there is any unselected protrusion member 20 in the set region R (step #66: No). The processes in step #64 to step #66 are equivalent to increasing the protrusion status by a predetermined value. When all the protrusion members 20 in the set region R have been selected (step #66: Yes), the protrusion height of the current-value protrusion member 20n is set to "0" which is the minimum protrusion height (step #67). The process in step #67 is equivalent to setting the protrusion status to "0". The second protrusion height determination process is thus terminated.

When the second protrusion height determination process is terminated, the process returns to FIG. 10. An image is displayed on the display screen 41 and the drive mechanism 30 drives the protrusion member 20 so as to be advanced and retracted (step #15) on the basis of the display image prepared in step #02 and the protrusion height (protrusion status) determined in step #14. This causes the protrusion member 20 corresponding to the reception image indicating that input of a command for the adjustment amount is acceptable to be brought into the protruded state. A second input determination process is executed in this state (step #16).

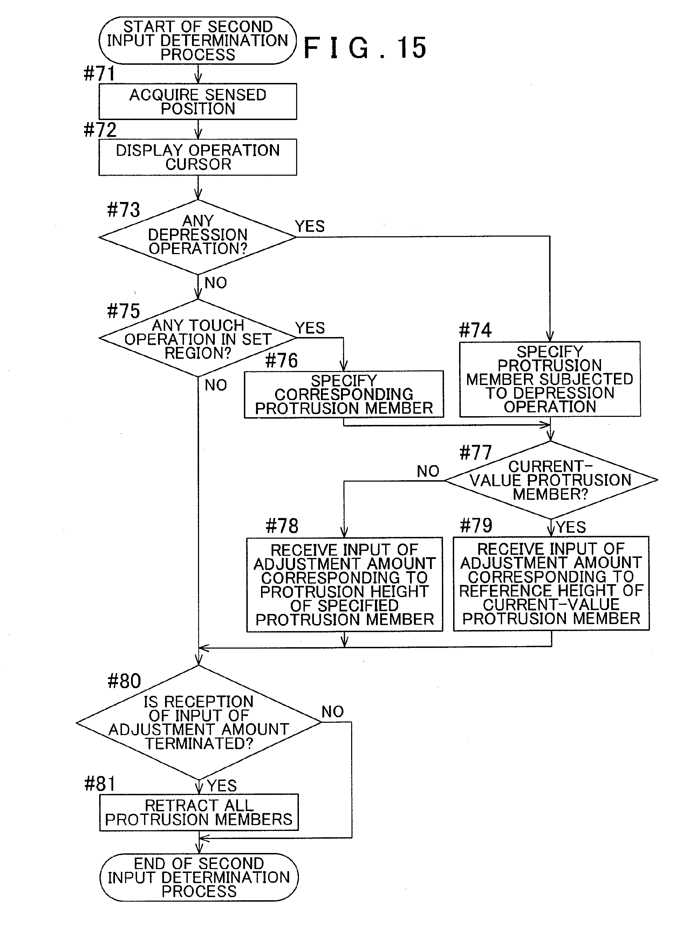

The processes in step #71 to step #73 of the second input determination process shown in FIG. 15 are the same as the processes in step #31 to step #33 of the first input determination process (see FIG. 12). In the case where it is determined that a depression operation is performed (step #73: Yes), the protrusion member 20 (adjustment protrusion member 20d) subjected to the depression operation is specified (step #74). In the case where the depression operation is performed on a plurality of protrusion members 20, for example, the protrusion member 20 that is the closest to the sensed position of the object to be sensed D on the operation surface 11a is specified. Alternatively, the protrusion member 20 for which the depression amount is the largest may be specified. In the case where it is determined in step #73 that a depression operation is not performed (step #73: No), it is determined whether or not a touch operation (including a tap operation and a double-tap operation) is performed in the set region R (step #75). In the case where a touch operation is sensed (step #75: Yes), the protrusion member 20 in the set region R corresponding to the position at which the touch operation is sensed is specified (step #76). Then, it is determined whether or not the protrusion member 20 specified in step #74 or step #76 is the current-value protrusion member 20n at the time point (step #77).

In the case where the specified protrusion member 20 is not the current-value protrusion member 20n (step #77: No), input of a value of the adjustment amount (in the example, a set value of the scale) corresponding to the protrusion height of the specified protrusion member 20 is received (step #78). In the case where the specified protrusion member 20 is the current-value protrusion member 20n (step #77: Yes), on the other hand, input of a value of the adjustment amount corresponding to the reference height Hs set for the current-value protrusion member 20n, rather than the previous protrusion height of the current-value protrusion member 20n, is received (step #79). In this case, the value of the adjustment amount is not changed. After that, in the example, a map image corresponding to the set value of the scale after the change is displayed on the display screen 41.

In the case where the value of the adjustment amount is changed in this way (step #78, step #79), or in the case where no depression operation or touch operation is sensed (step #73: No, step #75: No), it is determined whether or not reception of input of a command for the adjustment amount is terminated (step #80). In the case where reception is not terminated (step #80: No), no change is made. In the case where reception is terminated (step #80: Yes), all the protrusion members 20 are brought into the retracted state to bring the protrusion height of the protrusion members 20 to "0" (step #81). The second input determination process is thus terminated.

In the thus configured second input determination process, in the case where a part of the protrusion members 20 in the set region R is depressed, input of a command for a value of the adjustment amount corresponding to the protrusion height set for the depressed protrusion member 20 is received. This allows the user to input a command for a value of the adjustment amount through an intuitive operation of depressing toward the operation surface 11a the protrusion member 20 at a protrusion height that he/she feels corresponds to a desired value of the adjustment amount. In addition, as in the first input determination process discussed above, the user can input a command for a value of the adjustment amount in reliance on the protrusion member 20 protruding from the operation surface 11a without closely watching the display screen 41.

Returning to FIG. 10, when the first input determination process or the second input determination process is terminated, it is determined whether or not the image displayed on the display screen 41 is changed (step #07, step #17). In the case where no depression operation or touch operation is sensed in the first input determination process or the second input determination process, a screen transition is not likely to be performed. In such a case (step #07: No, step #17: No), the first input determination process or the second input determination process is executed again. In the case where a particular operation figure 44 is selected as a result of the input determination processes, in the case where input of a command for a new value of the adjustment amount is received, or the like, meanwhile, a screen transition may be performed. In such a case (step #07: Yes, step #17: Yes), the operation input reception process is terminated. The processes in step #01 and the subsequent steps are executed again on the display image after the change. The processes described above are repeatedly successively executed.

### 5. Other Embodiments

Lastly, operation input systems according to other embodiments of the present invention will be described. A configuration disclosed in each of the following embodiments may be applied in combination with a configuration disclosed in any other embodiment unless any contradiction occurs.

(1) In the embodiment described above, the protrusion control section 53 is configured to bring the protrusion height of the current-value protrusion member 20n to the minimum protrusion height (that is, "0"). However, embodiments of the present invention are not limited thereto. That is, the protrusion control section 53 may be configured to bring the protrusion height of the current-value protrusion member 20n to the maximum protrusion height. Alternatively, the protrusion control section 53 may be configured to make the protrusion height of the current-value protrusion member 20n larger or smaller by a predetermined value than the reference height Hs for the current-value protrusion member 20n. Alternatively, the protrusion height of the current-value protrusion member 20n may be decided in accordance with the current value of the adjustment amount. For example, the protrusion height of the current-value protrusion member 20n may be brought to the maximum protrusion height in the case where the current value of the adjustment amount is less than the middle value of the range in which the adjustment amount can be set, and may be brought to the minimum protrusion height in the case where the current value of the adjustment amount is not less than the middle value.

(2) In the embodiment described above, the protrusion control section 53 is configured to make the protrusion height of the current-value protrusion member 20n different from the reference height Hs corresponding to the current value of the adjustment amount. However, embodiments of the present invention are not limited thereto. That is, the protrusion height of all the protrusion members 20 disposed in the set region R, including the current-value protrusion member 20n, may be set to the reference height Hs for the corresponding protrusion member 20.

(3) In the embodiment described above, the value of an adjustment amount (scale) is set to be larger as the protrusion height of the corresponding adjustment protrusion member 20d is larger. However, embodiments of the present invention are not limited thereto. That is, the value of an adjustment amount may be set to be smaller as the protrusion height of the corresponding adjustment protrusion member 20d is larger. A designer may appropriately select one of the two options that he/she considers makes it easier for the user to intuitively recognize the value of the adjustment amount depending on the particular adjustment subject and the adjustment amount.

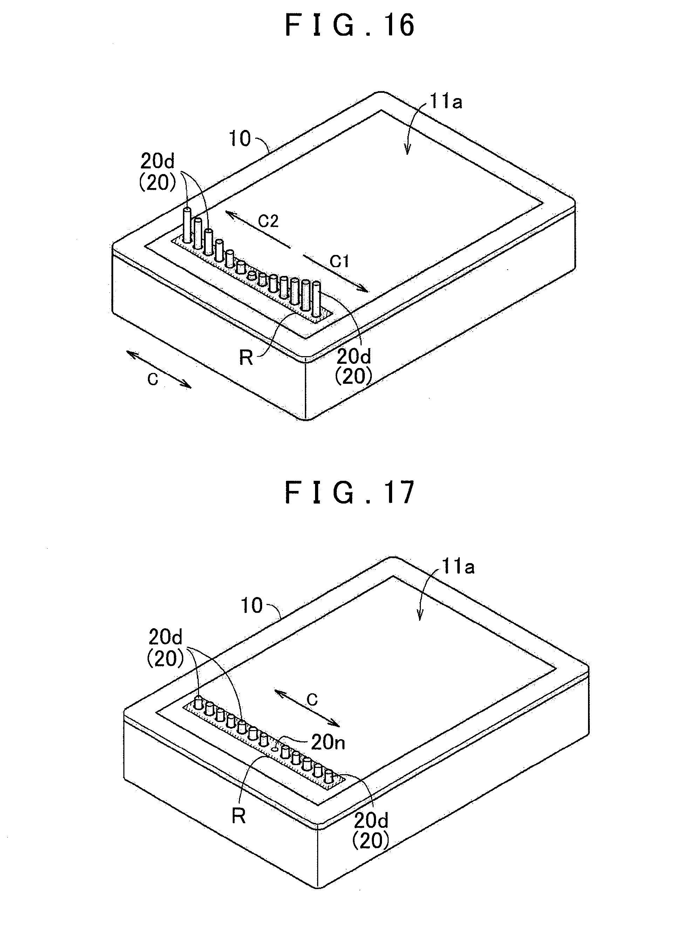

(4) In the embodiment described above, the protrusion height of the adjustment protrusion members 20d is varied stepwise only in one direction along the reference direction C, assuming a case where input of a command for a value of a single adjustment amount is to be received. However, embodiments of the present invention are not limited thereto. That is, the protrusion height of the adjustment protrusion members 20d may be varied stepwise in two directions (indicated as C1 and C2) opposite to each other along the reference direction C as shown in FIG. 16, for example. Such a configuration is suitable for a case where the adjustment amount may take positive to negative values, for example.

(5) In the embodiment described above, the protrusion control section 53 is configured to cause the plurality of adjustment protrusion members 20d disposed in the set region R to protrude such that the protrusion height of each adjustment protrusion member 20d is different stepwise in accordance with the position along the reference direction C. However, embodiments of the present invention are not limited thereto. That is, the protrusion control section 53 may be configured to cause the plurality of adjustment protrusion members 20d disposed in the set region R to protrude at a constant height irrespective of the position along the reference direction C as shown in FIG. 17, for example. In this case, the command reception section 58 may set a value of the adjustment amount corresponding to the position of the adjustment protrusion member 20d along the reference direction C, and in the case where a part of the adjustment protrusion members 20d in the set region R is depressed toward the operation surface 11a, the command reception section 58 may receive input of a command for a value of the adjustment amount set for the depressed adjustment protrusion member 20d. This also allows the user to input a command for a value of the adjustment amount through an intuitive operation of depressing toward the operation surface 11a the adjustment protrusion member 20d at a position that he/she feels corresponds to a desired value of the adjustment amount. In this case, the protrusion control section 53 may be configured to execute the control described above (adjustment input protrusion control) while a reception image indicating that input of a command for the adjustment amount is acceptable is displayed on the display screen 41. The protrusion control section 53 may also be configured to protrude the plurality of adjustment protrusion members 20d such that the protrusion height of each adjustment protrusion member 20d is varied irregularly (in a concave-convex shape, for example) along the reference direction C.

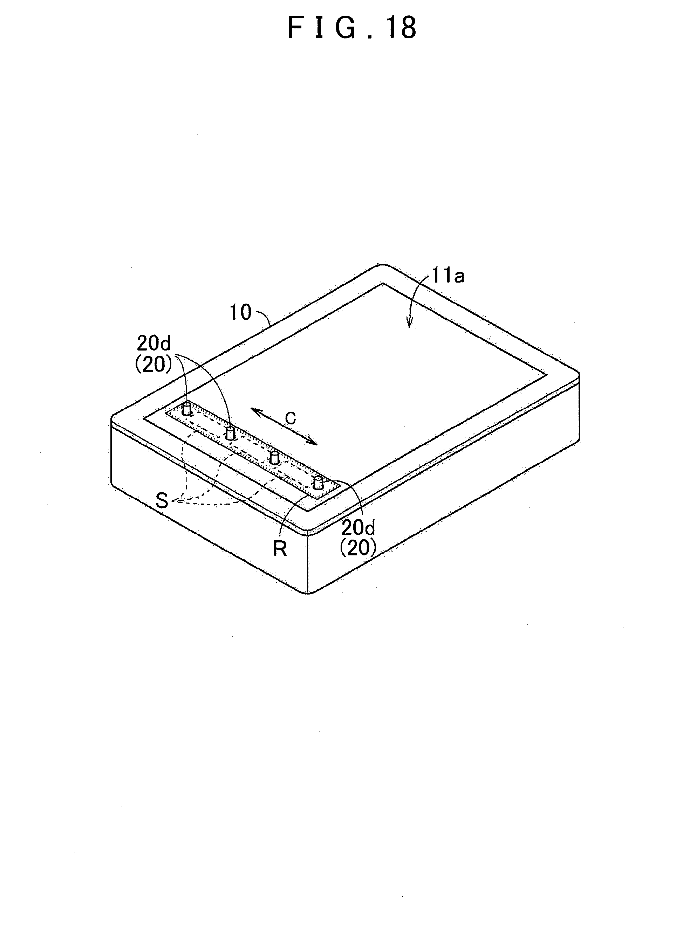

(6) In the embodiment described above, the protrusion control section 53 is configured to control all the protrusion members 20 disposed in the set region R. However, embodiments of the present invention are not limited thereto. That is, protrusion members 20 disposed in the set region R at every predetermined number of protrusion members 20, for example, may be controlled. FIG. 18 shows an example of such a configuration in which only four protrusion members 20 disposed at regular intervals are protruded at a constant height. In such a case, an inter-protrusion member region S is provided between each pair of adjustment protrusion members 20d provided in the set region R and spaced apart from each other along the reference direction C. In this case, the command reception section 58 may be configured to further set a value of the adjustment amount corresponding to the position of the inter-protrusion member region S along the reference direction C, and to receive input of a command for a value of the adjustment amount corresponding to the sensed position of the object to be sensed D in the set region R also on the basis of input received on the touch pad 10 in the set region R (inter-protrusion member region S). That is, a value of the adjustment amount corresponding to the position along the reference direction C may be set to each inter-protrusion member region S, and in the case where input is received in the inter-protrusion member region S on the touch pad 10, input of a command for a value of the adjustment amount set for the inter-protrusion member region S in which the object to be sensed D is sensed may be received. This allows to appropriately receive input of a command for a value of the adjustment amount by the medium of both the adjustment protrusion members 20d disposed in the set region R and the inter-protrusion member regions S in the set region R. Also in this case, the protrusion height of the protrusion members 20 may be controlled so as to become larger stepwise rather than be constant. In such a case, the command reception section 58 may be configured to receive input of a command for a value of the adjustment amount corresponding to the protrusion height of the protrusion member 20 that is positioned the closest to the sensed position of the object to be sensed D. Alternatively, the command reception section 58 may be configured to receive input of a command for an intermediate value between the adjustment amounts corresponding to the respective protrusion heights of two protrusion members 20 in the protruded state positioned on both sides of the sensed position.

(7) In the embodiment described above, the navigation apparatus 1 serves as the "particular adjustment subject", and a command for a set value of the scale serving as the adjustment amount is input. However, application of the present invention is not limited thereto. That is, audio systems and air conditioners for automobile use and home use, besides the navigation apparatus 1, may also be selected as the "particular adjustment subject", for example. The present invention may also be applied to input of a command for volume in audio systems and input of a command for temperature and air volume in air conditioners. In this case, a plurality of protrusion members 20 may be protruded such that the protrusion height of the protrusion members 20 becomes larger stepwise in each of a plurality of set regions R so that input of a command for a value of an adjustment amount for a plurality of "particular adjustment subjects" can be individually received.

(8) In the embodiment described above, a plurality of protrusion members 20 are provided to be able to protrude from the operation surface 11a of the touch pad 10, and the function of the touch pad 10 is assistively utilized to input a command for a value of an adjustment amount. However, embodiments of the present invention are not limited thereto. That is, a plurality of protrusion members 20 may be provided to be able to protrude from a predetermined single flat surface independently of the touch pad 10, and a command for a value of an adjustment amount may be input only on the basis of a depression operation performed on the plurality of protrusion members 20. In this case, the protrusion height of each protrusion member 20 may be sensed using a sensor or the like.

(9) In the embodiment described above, the protrusion height of the protrusion members 20 can be changed stepwise. However, embodiments of the present invention are not limited thereto. That is, the protrusion height of the protrusion members 20 may be changed continuously (linearly) by controlling the time for which the piezoelectric element 31 is vibrated, for example. In this case, the movement restriction mechanism provided in the embodiment described above may be dispensed with.

(10) In the embodiment described above, input for a change in scale performed using the operation slider is received when a route for guidance is set. However, embodiments of the present invention are not limited thereto. For example, input for a change in scale performed using the operation slider may be received when running on an expressway. That is, input for a change in scale may be performed using one of the operation buttons and the operation slider in accordance with the mode executed by the navigation apparatus 1, the running state of the vehicle, etc. Alternatively, input for a change in scale may be performed using a combination of the operation buttons and the operation slider, rather than one of the operation buttons and the operation slider. In the case where there is a plurality of "particular adjustment subjects", input may be performed using the operation buttons for some "particular adjustment subjects", and using the operation slider for other "particular adjustment subjects".

(11) In the embodiment described above, the plurality of protrusion members 20 are arranged regularly at constant intervals in each of the vertical and horizontal directions over the entire operation surface 11a, and arranged in a matrix (orthogonal grid) as a whole. However, embodiments of the present invention are not limited thereto. That is, it is only necessary that the plurality of protrusion members 20 should be arranged at least in accordance with a predetermined rule along the operation surface 11a, and the plurality of protrusion members 20 may be arranged in a honeycomb structure (hexagonal grid) over the entire operation surface 11a. In such cases, the plurality of protrusion members 20 may be arranged only on a part of the operation surface 11a, rather than on the entire operation surface 11a.

(12) In the embodiment described above, the drive mechanism 30 includes the piezoelectric element 31. However, embodiments of the present invention are not limited thereto. That is, the drive mechanism 30 may have any specific configuration as long as the drive mechanism 30 can cause advancing/retracting operation of the protrusion member 20 along the protrusion direction Z to move the protrusion member 20 between the protruded state and the retracted state. For example, the drive mechanism 30 may utilize a fluid pressure such as a liquid pressure or a gas pressure, or may utilize an electromagnetic force of an electromagnet or the like.

(13) In the embodiment described above, the protrusion member 20 is driven so as to be advanced and retracted along the protrusion direction Z set to a direction orthogonally intersecting the operation surface 11a. However, embodiments of the present invention are not limited thereto. That is, the protrusion direction Z may be set to a direction inclined with respect to, rather than orthogonally intersecting, the operation surface 11a. In this case, in the case where the touch pad 10 is disposed generally horizontally at the center console portion as in the embodiment described above, for example, the protrusion direction Z is preferably set to be inclined toward a driver's seat.

(14) In the embodiment described above, the touch pad 10 of the capacitance type which can sense the object to be sensed D in contact with or in proximity to the operation surface 11a is used. However, embodiments of the present invention are not limited thereto. That is, the touch pad 10 of the resistance film type may also be utilized in place of the touch pad 10 of the capacitance type. Alternatively, the touch pad 10 of a pressure sensitive type which can sense the object to be sensed D in contact with the operation surface 11a may also be utilized.

(15) In the embodiment described above, the operation input device 4 is communicably connected to the display input device 40 formed by integrating a display device and an input device such as a touch panel. However, embodiments of the present invention are not limited thereto. That is, the presence of a touch panel is not essential, and it is only necessary that the operation input device 4 should be connected to a display device including at least a display screen.

(16) In the embodiment described above, the state sensing section 55 is configured to sense the actual protrusion status of each protrusion member 20 on the basis of information acquired from a position sensor. However, embodiments of the present invention are not limited thereto. For example, the state sensing section 55 may be formed using the piezoelectric element 31 provided in the drive mechanism 30 as a sensor element, by utilizing the characteristics of the piezoelectric element 31. As discussed above, when the protrusion control section 53 drives the protrusion member 20 so as to be advanced and retracted, application of a voltage is stopped after a predetermined time elapses. Therefore, providing a configuration that enables to sense an external force (a depressing force provided by the user) applied to the piezoelectric element 31 via the protrusion member 20 and the coupling member 33 as an electric signal after the stop of the voltage application may achieve a configuration that enables to sense an operation (depression operation) for the protrusion member 20 performed by the user. Then, the state sensing section 55 may sense the actual protrusion status of each protrusion member 20 on the basis of the sensed depression operation and the protrusion status of each protrusion member 20 determined by the status determination section 52. That is, in the case where an electric signal from the piezoelectric element 31 corresponding to the protrusion member 20 in the protruded state is sensed, the state sensing section 55 determines that the protrusion member 20 has been brought into the retracted state. Meanwhile, in the case where a lapse of the predetermined time is detected by a timer or the like after the piezoelectric element 31 corresponding to the protrusion member 20 in the retracted state is vibrated, the state sensing section 55 determines that the protrusion member 20 has been brought into the protruded state.

(17) In the embodiment described above, the operation input computation section 50 includes the functional sections 51 to 58. However, embodiments of the present invention are not limited thereto. That is, the assignment of the functional sections described in relation to the embodiment described above is merely illustrative, and a plurality of functional sections may be combined with each other, or a single functional section may be further divided into sub-sections.

(18) Also regarding other configurations, the embodiment disclosed herein is illustrative in all respects, and the present invention is not limited thereto. That is, the scope of the present invention is defined by the appended claims.

The present invention may be suitably applied to an operation input system that allows to input a command for a value of an adjustment amount for a predetermined adjustment subject.

## Claims

1. An operation input system (3) comprising:
a plurality of protrusion members (20) arranged in accordance with a predetermined rule along a single flat surface (11a) and a distal end portion (21) of which is able to protrude from the flat surface (11a);
a protrusion control section (53) configured to control a protrusion height of each of the protrusion members (20) with respect to the flat surface (11a); and
a command reception section (58) configured to receive input of a command for a value of an adjustment amount for a particular adjustment subject selected from a plurality of types of adjustment subjects, wherein:
the protrusion control section (53) is configured to cause a plurality of the protrusion members (20) disposed along a predetermined reference direction (C) in a set region (R) set on the flat surface (11a) to protrude; and
the command reception section (58) is configured to set a value of the adjustment amount corresponding to a position of the protrusion members (20) along the reference direction (C), and in the case where a part of the protrusion members (20) in the set region (R) is depressed toward the flat surface (11a), the command reception section (58) receives input of a command for the value of the adjustment amount set for the depressed protrusion member (20).

2. The operation input system (3) according to claim 1, wherein:
the protrusion control section (53) is configured to perform protrusion height adjustment control in which a plurality of the protrusion members (20) disposed in the set region (R) are caused to protrude such that the protrusion height of the plurality of protrusion members (20) is different stepwise in accordance with the position along the reference direction (C); and
the command reception section (58) is configured to set a value of the adjustment amount corresponding to the position and the protrusion height of the protrusion members (20) along the reference direction (C), and in the case where a part of the protrusion members (20) in the set region (R) is depressed toward the flat surface (11a), the command reception section (58) receives input of a command for the value of the adjustment amount corresponding to the protrusion height set for the depressed protrusion member (20).

3. The operation input (3) system according to claim 2, further comprising:
a display device (40) that includes a display screen (41) and is configured to display an image on the display screen (41), wherein
the protrusion control section (53) is configured to execute the protrusion height adjustment control while a reception image indicating that input of a command for the adjustment amount is acceptable is displayed on the display screen (41).

4. The operation input system according to claim 2 or 3, wherein
the protrusion control section (53) is configured to make the protrusion height of a current-value protrusion member (20), which is one of a plurality of the protrusion members (20) disposed in the set region (R) and corresponds to a current value of the adjustment amount for the particular adjustment subject, different from a reference height corresponding to the current value of the adjustment amount, and in the case where the current-value protrusion member (20) is depressed toward the flat surface, the command reception section (58) receives input of a command for the value of the adjustment amount corresponding to the reference height.

5. The operation input system (3) according to claim 4, wherein
the protrusion control section (53) is configured to bring the protrusion height of the current-value protrusion member (20) to a minimum or a maximum.

6. The operation input system (3) according to claim 4 or 5, wherein:
in the case where input of a new value of the adjustment amount is received by the command reception section (58), the protrusion control section (53) is configured to bring the protrusion height of the protrusion member (20) corresponding to a previous value of the adjustment amount for the particular adjustment subject to a reference height corresponding to the previous value of the adjustment amount; and
the protrusion control section (53) is configured to make the protrusion height of the protrusion member (20) corresponding to the new value of the adjustment amount different from a reference height corresponding to the new value of the adjustment amount.

7. The operation input system (3) according to any of claims 1to 6, further comprising:
a touch pad (10) that includes an operation plate, on a surface of which an operation surface (11a) is formed, and is configured to sense an object to be sensed (D) in contact with or in proximity to the operation surface (11a) to receive input corresponding to a position of the sensed object (D), wherein:
the plurality of protrusion members (20) are provided to be able to independently protrude from the operation surface (11a) through the operation plate; and
the command reception section (58) is configured to determine that the protrusion member (20) is depressed toward the flat surface (11a) on the basis of input received on the touch pad (10) in the set region (R).

8. The operation input system (3) according to any of claims 1to 7, further comprising:
a touch pad (10) that includes an operation plate, on a surface of which an operation surface (11a) is formed, and is configured to sense an object to be sensed (D) in contact with or in proximity to the operation surface (11a) to receive input corresponding to a position of the sensed object (D), wherein
the command reception section (58) is further configured to set a value of the adjustment amount corresponding to a position of a region between a pair of the protrusion members (20) which are adjacent along the reference direction (C) in the set region (R), and to receive input of a command for a value of the adjustment amount corresponding to the position of the sensed object (D) in the set region (R) also on the basis of input received on the touch pad (10) in the set region (R).
